# EUROPEAN PATENT SPECIFICATION

(11) **EP 4 648 376 B1**
(45) Date of publication and mention of the grant of the patent: **04.11.2026**
(21) Application number: 23929431.7
(22) Date of filing: 31.03.2023
(51) Int. Cl.: H04L 41/0806, H04L 41/16, H04L 41/0853, H04L 41/14, H04L 41/085

(54) **COMMUNICATION METHODS AND APPARATUSES, DEVICE, CHIP AND STORAGE MEDIUM**
KOMMUNIKATIONSVERFAHREN UND -VORRICHTUNGEN, VORRICHTUNG, CHIP UND SPEICHERMEDIUM
PROCÉDÉS ET APPAREILS DE COMMUNICATION, DISPOSITIF, PUCE ET SUPPORT DE STOCKAGE

(43) Date of publication of application: 12.11.2025
(73) Proprietor: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: Taor, Simon Edward William
(86) International application number: PCT/CN2023/085576
(87) International publication number: WO 2024/197846

(56) References cited:
- EP-A1- 4 132 066
- WO-A1-2022/142366
- WO-A1-2022/173356
- WO-A1-2022/183496
- WO-A1-2022/222110
- CN-A- 113 573 331
- CN-A- 114 666 221
- US-A1- 2021 073 678
- US-A1- 2022 350 898

## Description

### TECHNICAL FIELD

Embodiments of the disclosure relate to the technical field of communications, and in particular to communication methods and apparatuses.

### BACKGROUND

Vertical federated learning (VFL) allows an artificial intelligence (AI) system to efficiently and accurately use local data from multiple nodes on the premise of satisfying the requirements of data privacy, security and supervision, thereby breaking data silos and enabling multi-node data sharing across domains on the premise of ensuring privacy and security.

However, there is currently no solution to reveal how an existing network architecture (such as the 5G network architecture) can support a cross-domain VFL.

EP 4132066 A1 discloses a communication method, apparatus, and system, and relates to the field of data analytics. The method can extend a data analytics application scenario.

### SUMMARY

The embodiments of the disclosure provide communication methods and apparatuses.

The features of the methods and apparatuses according to the present invention are defined in the independent claims, and the preferable features according to the present invention are defined in the dependent claims.

In the first aspect, the embodiments of the disclosure provide a communication method as set forth in claim 1.

In the second aspect, the embodiments of the disclosure provide a communication method as set forth in claim 12.

In the third aspect, the embodiments of the disclosure provide a communication apparatus as set forth in claim 14.

In the fourth aspect, the embodiments of the disclosure provide a communication apparatus as set forth in claim 15.

In the embodiments of the disclosure, the first node may receive the first information from the first network element, and the first information indicates at least one second node satisfying a condition for executing the VFL task. Further, the first node may determine, from the at least one second node, at least one participating node participating in the VFL task. In this way, it can be ensured that the first node can find a suitable node to execute the VFL task.

### BRIEF DESCRIPTION OF THE DRAWINGS

The accompanying drawings described herein are intended to provide a further understanding of the disclosure, and constitute a part of the disclosure. The schematic embodiments of the disclosure and the description thereof are intended to explain the disclosure, and do not constitute an undue limitation of the disclosure.
FIG. 1 is a schematic diagram illustrating an application scenario according to an embodiment of the disclosure.
FIG. 2 is a schematic diagram illustrating an example of a training process of a VFL.
FIG. 3 is a schematic diagram illustrating an example of an inference process of a VFL.
FIG. 4 is a schematic diagram illustrating an example of a 5G network architecture.
FIG. 5 is a schematic flowchart of a communication method according to an embodiment of the disclosure.
FIG. 6 is a schematic flowchart of another communication method according to an embodiment of the disclosure.
FIG. 7 is a first schematic diagram illustrating a possible implementation flow of a communication method according to an embodiment of the disclosure.
FIG. 8 is a second schematic diagram illustrating a possible implementation flow of a communication method according to an embodiment of the disclosure.
FIG. 9 is a third schematic diagram illustrating a possible implementation flow of a communication method according to an embodiment of the disclosure.
FIG. 10 is a first schematic structural diagram of a communication apparatus according to an embodiment of the disclosure.
FIG. 11 is a second schematic structural diagram of a communication apparatus according to an embodiment of the disclosure.
FIG. 12 is a third schematic structural diagram of a communication apparatus according to the disclosure.
FIG. 13 is a schematic structural diagram of a communication device according to the disclosure.
FIG. 14 is a schematic structural diagram of a chip according to the disclosure.
FIG. 15 is a schematic block diagram of a communication system according to the disclosure.

### DETAILED DESCRIPTION

Hereinafter, technical solutions in the embodiments of the disclosure will be described with reference to the accompanying drawings in the embodiments of the disclosure, and it is apparent that the described embodiments are part of the embodiments of the disclosure, but not all of the embodiments. All other embodiments obtained by a person of ordinary skill in the art based on the embodiments in the disclosure without creative work shall fall within the scope of protection of the disclosure.

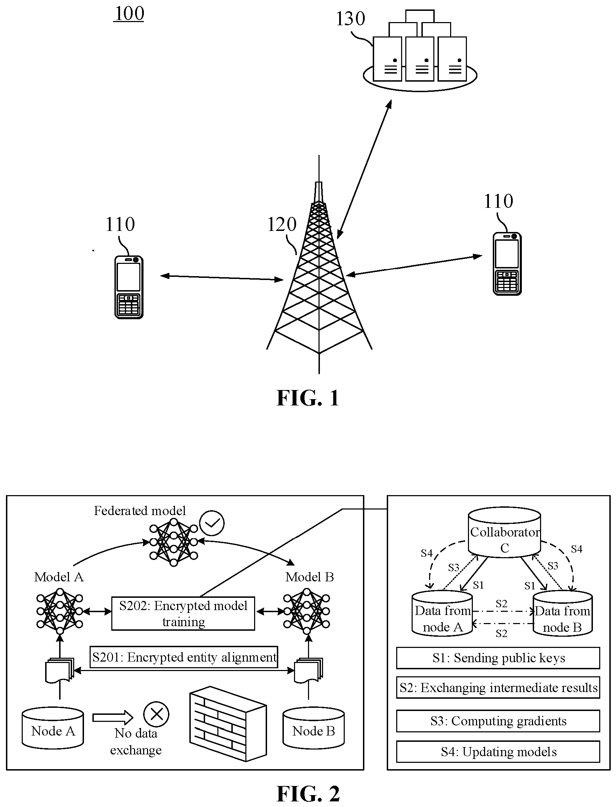

FIG. 1 is a schematic diagram illustrating an application scenario according to an embodiment of the disclosure.

As illustrated in FIG. 1, a communication system 100 may include terminal devices 110 and a network device 120. The network device 120 may communicate with the terminal device 110 via an air interface. Multi-service transmission is supported between the terminal device 110 and the network device 120.

It should be understood that the embodiments of the disclosure are only illustrated with reference to the communication system 100, but the embodiments of the disclosure are not limited thereto. That is, the technical solutions in the embodiments of the disclosure may be applicable to various communication systems, such as a long term evolution (LTE) system, an LTE time division duplex (TDD) system, a universal mobile telecommunication system (UMTS), an internet of things (IoT) system, a narrow band internet of things (NB-IoT) system, an enhanced machine-type communication (eMTC) system, a 5G communication system (also referred to as a new radio (NR) communication system), or future communication systems (such as a 6G communication system), etc.

In the communication system 100 illustrated in FIG. 1, the network device 120 may be an access network device that communicates with the terminal device 110. The access network device may provide communication coverage for a particular geographic area and may communicate with a terminal device 110 (for example, user equipment (UE)) located within that coverage area.

The network device 120 may be an evolutional node B (eNB or eNodeB) in an LTE system, a next generation radio access network (NG RAN) device, a base station (gNB) in an NR system, or a radio controller in a cloud radio access network (CRAN), or the network device 120 may be a relay station, an access point, an in-vehicle device, a wearable device, a hub, a switch, a bridge, a router, or a network device in a future evolved public land mobile network (PLMN).

The terminal device 110 may be any terminal device including, but not limited to, a terminal device connected with the network device 120 or other terminal devices in a wired or wireless manner.

For example, the terminal device 110 may refer to an access terminal, UE, a subscriber unit, a subscriber station, a mobile station, a mobile platform, a remote station, a remote terminal, a mobile device, a user terminal, a terminal, a wireless communication device, a user agent, or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device with wireless communication functionality, a computing device or other processing devices connected to a wireless modem, an in-vehicle device, a wearable device, a terminal device in a 5G network or a terminal device in a future evolution network, or the like.

The terminal device 110 may be used for device to device (D2D) communication.

The wireless communication system 100 may further include a core network device 130 in communication with the network device 120, and the core network device 130 may be a 5G core (5GC) device.

FIG. 1 exemplarily illustrates one network device, one core network device, and two terminal devices. Alternatively, the wireless communication system 100 may include multiple network devices, and another number of terminal devices may be included within the coverage range of each network device, which is not limited by the embodiments of the disclosure.

It should be noted that FIG. 1 illustrates a system applicable to the disclosure by way of example only, and the method shown in the embodiments of the disclosure may also be applicable to other systems. Further, the terms "system" and "network" are often used interchangeably herein. The term "and/or" is used herein to describe an association between associated objects and represents that three relationships may exist between the associated objects. For example, A and/or B may represent three conditions: independent existence of A, existence of both A and B and independent existence of B. In addition, the character "/" used herein usually represents that the associated objects before and after the character "/" form an "or" relationship. It should also be understood that the term "indication" mentioned in the embodiments of the disclosure may be a direct indication, an indirect indication, or a representation of an association. For example, A indicates B, which may represent that A directly indicates B, for example, B may be obtained through A; A indicates B, which may also represent that A indirectly indicates B, for example, A indicates C, and B may be obtained through C; or, A indicates B, which may further represent that there is an association between A and B. It should also be understood that the term "corresponding to" mentioned in the embodiments of the disclosure may represent a direct correspondence or an indirect correspondence between two items, may also represent an association between the two items, or may further be a relationship such as indication and being indicated, configuration and being configured or the like. It should also be understood that the term "predefinition/predefined" or "a predefined rule" mentioned in the embodiments of the disclosure may be implemented by pre-storing corresponding codes, or tables in devices (e.g., including the terminal device and the network device) or by other ways that may be used to indicate related information, and the specific implementation thereof is not limited herein. For example, the predefinition may refer to what is defined in a protocol. It should also be understood that in the embodiments of the disclosure, the "protocol" may refer to standard protocols in the communication field, including such as an LTE protocol, an NR protocol, and related protocols to be applied in a future communication system, which is not limited herein.

In order to generate an AI model that better satisfies the requirements of a user, a training of the model requires more dimensional data from the user. In actual scenarios, user data may be distributed on various nodes such as the terminal, the base station, the core network, and a third party over the top (OTT) application server. If the model may be trained by combining different feature data of the same user at various nodes, a training effect of the model will be greatly improved, which has great significance to the training of the model. However, multi-node and multi-domain data sharing will pose a great challenge to a data privacy. For this purpose, a VFL method may be used. The VFL allows an AI system to efficiently and accurately use local data from multiple nodes on the premise of satisfying the requirements of data privacy, security and supervision, thereby breaking data silos and enabling multi-node data sharing across domains on the premise of ensuring privacy and security. However, there is currently no solution to reveal how an existing network architecture can support the cross-domain VFL.

In view of this, the disclosure provides a communication method. In the method, a first node may receive first information from a first network element, and can know at least one second node satisfying a condition for executing a VFL task through the first information. In this way, it can be ensured that the first node can find a suitable node to execute the VFL task.

In order to facilitate understanding of the technical solutions in the embodiments of the disclosure, technologies related to the embodiments of the disclosure will be described below, the related technologies below, as optional solutions, may be arbitrarily combined with the technical solutions in the embodiments of the disclosure, and all of them belong to the scope of protection of the embodiments of the disclosure.

### 1. VFL

FIG. 2 is a schematic diagram illustrating an example of a training process of a VFL. As illustrated in FIG. 2, a node A and a node B are nodes in different domains, and there is no original data exchange between the node A and the node B. In order to be able to use data from multiple nodes for training the model, the training process of the VFL may include the following operations S201-S202.

At S201, encrypted entity alignment.

The VFL is suitable for a case where IDs of training samples of participants overlap more and data features overlap less. In the VFL, the samples of the participants need to be aligned to increase a feature dimension of each sample without increasing the ID of the sample. For example, UE in a certain area generates different feature data at different nodes of the communication system. An ID of the UE is the ID of the sample. In this scenario, the feature data generated by the UE at different nodes need to be aligned (associated).

At S202, encrypted model training

After the samples are aligned, a model encryption training may be performed on the aligned samples, and then a federated model with better performance may be obtained by training based on a model A obtained by the node A and a model B obtained by the node B. As an example, the operation S202 may include the following operations S1-S4.

At S1, sending public keys.

As illustrated in FIG. 2, a third-party collaborator C may send public keys to the node A and the node B for encrypting data that needs to be transmitted. The method for encryption may be, for example, a homomorphic encryption algorithm. In the homomorphic encryption algorithm, homomorphic encryption for the sum of two samples m1 and m2 is equal to the sum of the homomorphic encryption for m1 and the homomorphic encryption for m2, and the homomorphic encryption for a sample m multiplied by a constant is equal to the homomorphic encryption for the sample m and then multiplied by the constant.

At S2, exchanging intermediate results.

In the VFL, a party with a sample label may be an active party (or referred to as a demander), such as the node B in FIG. 2. The node A may act as a passive party (or referred to as a data provider), and the passive party does not have the sample label. In this operation, the node A and the node B may use their own local data for calculation respectively, to obtain an intermediate result of the model. The node A may encrypt the obtained intermediate result and transmit it to the node B, and then the node B may calculate and obtain a whole output error of the model based on its own label and the model output results (the intermediate results) from the node A and the node B, and encrypt the output error and transmit it to the node A.

At S3, computing gradients.

In this operation, each of the node A and the node B may calculate and obtain a respective encrypted gradient based on the output error obtained in the operation S2, and may add a mask to the calculation result and transmit it to the collaborator C.

At S4, updating models.

After the collaborator C decrypts the gradients transmitted by the node A and the node B, the coordinator C may transmit the decrypted gradients back to the node A and the node B respectively. Then, after removing the masks from the gradients, the node A and the node B may update their respective models based on the obtained gradients.

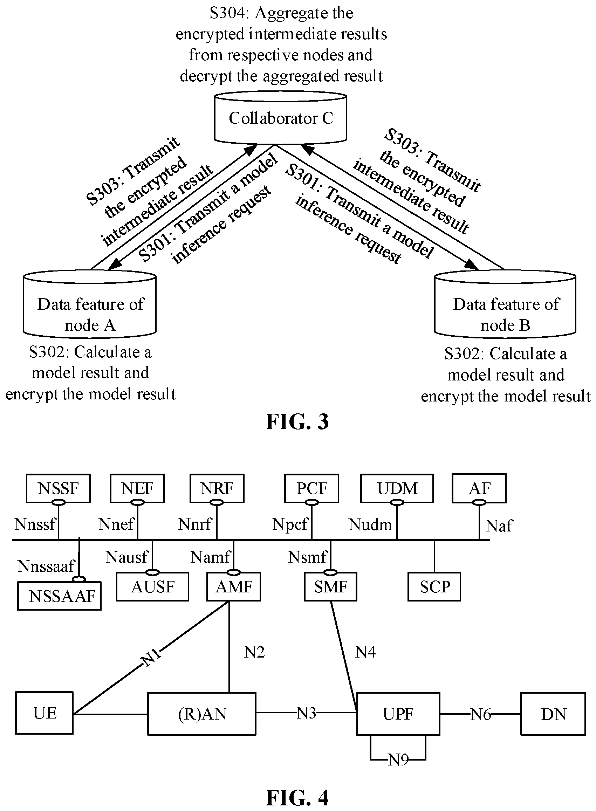

FIG. 3 is a schematic diagram illustrating an example of an inference process of a VFL. As illustrated in FIG. 3, the inference process of the VFL may include the following operations S301-S304.

At S301, a model inference request is transmitted.

The collaborator C may transmit a model inference request to the node A and the node B, respectively. The model inference request may include an ID of the model to be used by each of the node A and the node B, to indicate the respective model to be used by each of the node A and the node B.

At S302, each of the node A and the node B calculates the model result and encrypts the model result.

In this operation, each of the node A and the node B may calculate and obtain the intermediate result of the model based on its own data and a locally stored model, respectively, and encrypts the intermediate result.

At S303, each of the node A and the node B transmits the encrypted intermediate result to the collaborator C.

At S304, the collaborator C aggregates the encrypted intermediate results from respective nodes and decrypts the aggregated result.

In this operation, the collaborator C may aggregate the encrypted intermediate results of the node A and the node B to obtain an encrypted model inference result. Furthermore, the collaborator C may decrypt the model inference result, and may transmit the decrypted inference result to the demand node B.

### 2. Fifth Generation (5G) network architecture

In the 5G network architecture, an important feature is the "service-oriented architecture". The core network element (a service provider) may provide a specific service, which may be invoked by other network elements (consumers) via a defined application programming interface (API).

It should be understood that the "core network element" in the embodiments of the disclosure may also be referred to as a "core network function (NF)".

FIG. 4 is a schematic diagram illustrating an example of a 5G network architecture. As illustrated in FIG. 4, the network architecture may include, for example, a UE, an access network (AN)/radio access network (RAN), and core network elements. The core network elements include: a user plane function (UPF), a data network (DN), a session management function (SMF), an access and mobility management function (AMF), a network slice selection function (NSSF), an authentication server function (AUSF), a network exposure function (NEF), a network repository function (NRF), a policy control function (PCF), a unified data management (UDM) and an application function (AF).

The UE connects with the base station via an access stratum (AS) for an interaction of an AS message and transmission of wireless data. The UE connects with the AMF via a non-access stratum (NAS) for an interaction of a NAS message. The AMF is responsible for managing a mobility of the UE, and the SMF is responsible for managing a session of the UE. The AMF is also responsible for forwarding a session management related message between the UE and the SMF, in addition to the mobility management of the mobile terminal. The PCF is responsible for formulating policies related to mobility management, session management, charging, etc. for the UE. The UPF is connected to the base station and an external data network and transmits data.

In addition, the 5G network has also added a network data analytics function (NWDAF) to the core network, through which data may be collected from respective network elements of the core network, a network management system and the like, and big data statistics, analysis or intelligent data analysis may be performed, so as to obtain analysis and/or prediction data on a network side, and then assist respective network elements to control the UE access more effectively based on the data analysis results.

Next, respective network elements illustrated in FIG. 4 will be briefly introduced.
1) The UE may be referred to as a terminal device, an access terminal, a subscriber unit, a subscriber station, a mobile station, a mobile platform, a remote station, a remote terminal, a mobile device, a user terminal, a terminal, a wireless communication device, a user agent, or a user device. The embodiments of the disclosure do not limit the specific technology and the specific device form used by the UE.
2) The (radio) access network ((R)AN) device may provide an authorized user in a specific area with the function of accessing the communication network. Specifically, it may include a radio network device in the 3rd generation partnership project (3GPP) network, may also include an access point in a non-3GPP network. The embodiments of the disclosure do not limit the specific technology and specific device form used by the (R)AN device.
3) The AMF is mainly used for access control, mobility management, attachment and de-attachment and other functions. The AMF may also serve as an anchor point for connection of the N1 signaling (i.e., signaling of the N1 interface, referred to as the N1 signaling for short) and the N2 signaling (i.e., signaling of the N2 interface, referred to as the N2 signaling for short), to provide routing of an N1/N2 session management (SM) message for the SMF. The AMF may also maintain and manage status information of the UE.
4) The SMF is mainly used for a selection of a user plane network element, a redirection of the user plane network element, an internet protocol (IP) address allocation of the terminal device, an establishment, modification and release of the session, and a QoS control.
5) The UPF is mainly used for receiving and forwarding user plane data. For example, the UPF may receive the user plane data from the DN and transmit the user plane data to the terminal device via the AN device. The UPF may also receive the user plane data from the terminal device via the AN device and forward it to the DN.
6) The PCF is mainly used as a unified policy framework for guiding a network behavior, and provides policy rule information for control plane network elements (such as AMF, SMF, etc.).
7) The AF is mainly used for providing services to the 3GPP network, such as interacting with the PCF for policy control, etc.
8) The UDM is mainly used for management of subscription data for the UE, which includes storage and management of an identifier of the UE, an access authorization of the UE, etc. The UDM may also generate an authentication credential of 3GPP for the UE. The UDM may also register and maintain the network elements currently serving the UE.
9) The NEF is mainly used for securely opening the services and capabilities provided by the 3GPP network functions to an outside world.
10) The DN mainly refers to an operator network providing a data service to the UE, such as the Internet, a service network of the third party, an IP multi-media service (IMS) network, and the like.
11) The AUSF is mainly used for user authentication, etc., such as security authentication of the UE when the UE accesses the network.
12) The NSSF is mainly used for selecting a slice instance set for the UE, and determining an AMF set and allowed network slice selection assistance information (NSSAI) for the UE.

In the network architecture illustrated in FIG. 4, respective network elements may communicate with each other via the interfaces illustrated in the figure, and some of the interfaces may be implemented in the form of service-oriented interfaces. As illustrated in FIG. 4, the UE may communicate with the AMF via the N1 interface. The RAN may communicate with the AMF via the N2 interface. The RAN may communicate with the UPF via the N3 interface, and the N3 interface may be used to transmit data on the user plane, etc. The SMF may communicate with the UPF via the N4 interface. The UPF may communicate with the DN via the N6 interface. The UPF may communicate with another UPF via the N9 interface, and the N9 interface may be used to transmit uplink-downlink user data streams between the UPFs, etc. The relationships between other interfaces and respective network elements are illustrated in FIG. 4, which will not be described in detail here for the sake of brevity.

It is to be understood that the above names are defined only to facilitate distinguishing between different functions, and should not constitute any limitation to the disclosure. The disclosure does not exclude the possibility of using other names in the 6G network and other future networks. For example, in the 6G network, some or all of the above network elements may follow the terminologies in 5G, or other names may be used.

It should also be understood that the names of the interfaces between the network elements in FIG. 4 are merely exemplary, and the names of the interfaces in the specific implementation may be other names, which are not specifically limited in the disclosure. Furthermore, the names of the messages (or signaling) transmitted between the respective network elements described above are merely exemplary and do not constitute any limitation to the functions of the messages themselves.

The terms involved in the disclosure have been briefly described above, and will not be repeatedly described in the following examples.

In order to facilitate understanding of the technical solutions in the embodiments of the disclosure, the technical solutions in the disclosure will be described in detail below with reference to specific examples. The above related technologies may be arbitrarily combined with the technical solutions in the embodiments of the disclosure as optional solutions, and all of them belong to the scope of protection of the embodiments of the disclosure. The embodiments of the disclosure include at least some of the following contents.

It should be understood that a first node in the embodiments of the disclosure represents a node that initiates a VFL task, or the first node is an initiator (or referred to as an active party/demander) of the VFL task, that is, the VFL task in the embodiments of the disclosure may be initiated by the first node. Accordingly, a second node represents a node that may participate in the VFL task as a non-initiator, or the second node may be a passive party (or referred to as a data provider) of the VFL task. The number of second nodes may be one or more (two or more than two), which is not limited in the embodiments of the disclosure.

It should also be understood that the first node in the embodiments of the disclosure may be, for example, a terminal device, an access network element, a core network element (a core NF), or an AF. The second node may include, for example, at least one of: a terminal device, an access network element, a core network element, or an AF. A first network element may be, for example, an NRF. The AF may be a trusted AF (such as the AF of the operator) or an untrusted third party AF (such as the AF of other vendors). Whether the AF is a trusted AF may be confirmed or identified by the core network. For example, if the core network belongs to the core network deployed by the operator A, the core network may confirm or identify the AF belonging to the operator A as the trusted AF, and may confirm or identify an AF not belonging to the operator A as an untrusted third party AF.

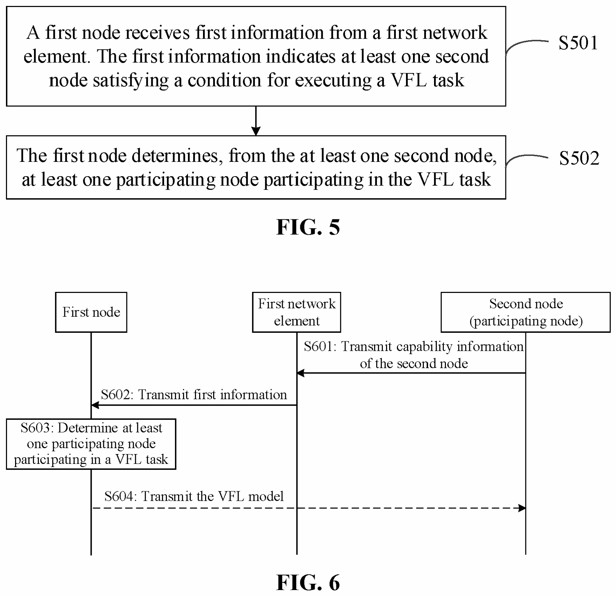

FIG. 5 illustrates a communication method according to an embodiment of the disclosure. The method includes the following operations.

In operation S501, a first node receives first information from a first network element. The first information indicates at least one second node satisfying a condition for executing a VFL task.

In a possible implementation, since the VFL task is initiated by the first node, "satisfying the condition for executing the VFL task" may also be understood as satisfying the condition for executing the VFL task initiated by the first node.

As an implementation, the first node may initiate the VFL task by transmitting second information to the first network element. Exemplarily, the second information may indicate at least one of: 1) an execution of the VFL task, in other words, a task type initiated by the first node is a VFL task; 2) a time interval during which the VFL task is executed, in other words, a time interval during which the first node expects to execute the VFL task, such as 9:00 to 21:00; 3) being an initiator of the VFL task, in other words, the first node expects to be the initiator of the VFL task; 4) a computing power requirement for executing the VFL task, such as the minimum computing power requirement for executing the VFL task initiated by the first node; or 5) a service area where the VFL task is executed, in other words, a service area where the first node expects to execute the VFL task.

In a possible implementation, after receiving the second information from the first node, the first network element may transmit the first information to the first node to indicate, to the first node, at least one second node satisfying the condition for executing the VFL task. Accordingly, the first node may receive the first information from the first network element. In this way, the first node may know at least one second node satisfying the condition for executing the VFL task through the first information, thereby ensuring that the first node can find a suitable node to execute the VFL task.

As an example, the first information may, for example, carry an identifier and/or address information of at least one second node satisfying the condition for executing the VFL task.

In some embodiments, whether the second node satisfies the condition for executing the VFL task is determined by the first network element based on capability information of the second node. In other words, the first network element may determine, based on the capability information of the second node, whether the second node satisfies the condition for executing the VFL task.

Exemplarily, the capability information of the second node may indicate at least one of the followings.
1) Whether the second node supports an execution of the VFL task. For example, the capability information of the second node may include an indication as to whether the second node supports an execution of the VFL task, to indicate that the second node supports an execution of the VFL task or does not support the execution of the VFL task.
2) A time interval during which the second node supports the execution of the VFL task. For example, the capability information of the second node may indicate that the second node may execute the VFL task from 9:00 to 21:00.
3) Whether the second node is available as an initiator of the VFL task. For example, the capability information of the second node may include an indication as to whether the second node is available as an initiator of the VFL task, to indicate that the second node is available as an initiator of the VFL task or is not available as an initiator of the VFL task.
4) A computing power of the second node, for example, the maximum computing power or range of computing power that can be provided by the second node.
5) A service area of the second node. When the second node is an access network element, the service area of the second node may also be understood as a signal coverage area of the access network element.

For example, it is assumed that the second information indicates that the time interval during which the first node expects to execute the VFL task is 9:00 to 21:00, and the service area where the first node expects to execute the VFL task is a first service area, then after receiving the second information from the first node, the first network element may compare the capability information, of respective second nodes, collected or stored by the first network element with the content of the second information, determine at least one second node that supports the execution of the VFL task from 9:00 to 21:00 and the service area of which includes the first service area, and transmit, to the first node, the information (such as the identifier and/or address information) of the at least one second node by carrying the information of the at least one second node in the first information.

In some embodiments, the capability information of the second node may be carried, for example, in parameter information of the second node, and transmitted by the second node to the first network element. In this case, the method may further include the following operation. The second node transmits the parameter information of the second node to the first network element. Accordingly, the first network element may receive and store the parameter information of the second node. In other words, the first network element may collect or determine the parameter information of the second node. The parameter information of the second node may include, for example, at least one of: the capability information of the second node, an identifier (ID) of the second node, address information of the second node, or an identifier of an application corresponding to the second node.

It may be understood that when there are multiple second nodes, each of the multiple second nodes may transmit parameter information of the second node to the first network element, and the parameter information of each of the multiple second nodes includes at least one item of the above parameter information.

In some embodiments, before the first node initiates the VFL task, each of the multiple second nodes may transmit the parameter information of the second node to the first network element, so that the first network element may collect the parameter information of respective second nodes before the first node initiates the VFL task. Further, when the first node initiates the VFL task, the first network element may acquire the capability information of each of the second nodes from the collected parameter information of the second node. Further, the first network element may determine at least one second node satisfying the condition for executing the VFL task based on the capability information of the respective second nodes, and transmit, to the first node, the information (such as the identifier and/or address information) of the at least one second node by carrying the information of the at least one second node in the first information.

In operation S502, the first node determines, from the at least one second node, at least one participating node participating in the VFL task.

Exemplarily, the first node may determine at least one participating node participating in the VFL task from at least one second node satisfying the condition for executing the VFL task.

As an implementation, the operation that the first node determines the at least one participating node participating in the VFL task from the at least one second node satisfying the condition for executing the VFL task includes the following operation. The second node that agrees to participate in the VFL task initiated by the first node is determined to be the participating node participating in the VFL task. In other words, if a certain second node satisfies the condition for executing the VFL task and agrees to participate in the VFL task initiated by the first node, the second node may be determined to be the participating node participating in the VFL task.

In some embodiments, the method further includes the following operation. The first node transmits data requirement information to the at least one second node. The data requirement information is used for determining data for executing the VFL task. Accordingly, each of the at least one second node receives the data requirement information from the first node.

The data requirement information includes a type of the data required for executing the VFL task, and/or a valid time of the required data. The type of the data may include a format of the data (for example, 8-bit quantization or 24-bit quantization), and may also include a type of data content (for example, application layer data, data related to a power of the device, data related to communication performance of the device, etc.).

In a possible implementation, after receiving the data requirement information from the first node, the second node may decide whether to agree to participate in the VFL task initiated by the first node based on a local configuration or related policies. For example, the second node may agree to participate in the VFL task if data satisfying the corresponding data requirement exists locally in the second node, and the second node may refuse to participate in the VFL task if the data satisfying the corresponding data requirement does not exist locally in the second node. Furthermore, the second node may reply to the first node with a decision on whether to agree to participate in the VFL task.

In some embodiments, the second node replies to the first node by carrying the decision on whether to agree to participate in the VFL task in third information. In this case, the method further includes the following operation. The second node transmits the third information to the first node. The third information indicates whether the second node agrees to participate in the VFL task initiated by the first node. Accordingly, the first node receives the third information from the second node. The first node may know, based on the third information, whether the second node agrees to participate in the VFL task initiated by the first node.

FIG. 6 illustrates another communication method according to an embodiment of the disclosure. The method includes the following operations.

In operation S601, a second node transmits capability information of the second node to a first network element. Accordingly, the first network element receives the capability information of the second node.

In this operation, the second node may transmit the capability information of the second node to the first network element. The capability information of the second node may represent the capability of the second node to execute the VFL task. The first network element may determine, based on the capability information of the second node, whether the second node satisfies a condition for executing the VFL task. In other words, whether the second node satisfies the condition for executing the VFL task is determined by the first network element based on the capability information of the second node. That is, the capability information of the second node may be used by the first network element to determine whether the second node satisfies the condition for executing the VFL task.

Exemplarily, the capability information of the second node may indicate at least one of the followings.
1) Whether the second node supports an execution of the VFL task. For example, the capability information of the second node may include an indication as to whether the second node supports an execution of the VFL task, to indicate that the second node supports an execution of the VFL task or does not support the execution of the VFL task.
2) A time interval during which the second node supports the execution of the VFL task. For example, the capability information of the second node may indicate that the second node may execute the VFL task from 9:00 to 21:00.
3) Whether the second node is available as an initiator of the VFL task. For example, the capability information of the second node may include an indication as to whether the second node is available as an initiator of the VFL task, to indicate that the second node is available as an initiator of the VFL task or is not available as an initiator of the VFL task.
4) A computing power of the second node, for example, the maximum computing power or range of the computing power that can be provided by the second node.
5) A service area of the second node. When the second node is an access network element, the service area of the second node may also be understood as a signal coverage area of the access network element.

In some embodiments, the capability information of the second node may be carried, for example, in parameter information of the second node, and transmitted by the second node to the first network element. In this case, the method may further include the following operation. The second node transmits the parameter information of the second node to the first network element. Accordingly, the first network element may receive and store the parameter information of the second node. In other words, the first network element may collect or determine the parameter information of the second node. The parameter information of the second node may include, for example, at least one of: the capability information of the second node, an identifier (ID) of the second node, address information of the second node, or an identifier of an application corresponding to the second node.

It may be understood that when there are multiple second nodes, the parameter information of each of the multiple second nodes includes at least one item of the above parameter information.

In an example, the second node is a terminal, and the parameter information of the terminal may include, for example, at least one of: capability information of the terminal, an identifier of the terminal, address information (such as an IP address) of the terminal, or a type of the terminal (such as a mobile phone, a vehicle, or the like). The capability information of the terminal may indicate at least one of: whether the terminal supports an execution of the VFL task, a time interval during which the terminal supports the execution of the VFL task, whether the terminal is available as an initiator of the VFL task, or a computing power of the terminal.

In another example, the second node is an access network element, and the parameter information of the access network element may include, for example, at least one of: capability information of the access network element, an identifier of the access network element (such as a gNB ID), or address information of the access network element. The capability information of the access network element may indicate at least one of: whether the access network element supports an execution of the VFL task, a time interval during which the access network element supports the execution of the VFL task, whether the access network element is available as an initiator of the VFL task, a computing power of the access network element, or a service area of the access network element.

In yet another example, the second node is a core network element, and the parameter information of the core network element may include, for example, at least one of: capability information of the core network element, address information of the core network element, or a type of the core network element (for example, SMF, AMF, etc.). The capability information of the core network element may indicate at least one of: whether the core network element supports an execution of the VFL task, a time interval during which the core network element supports the execution of the VFL task, whether the core network element is available as an initiator of the VFL task, a computing power of the core network element, or a service area of the core network element.

In yet another example, the second node is an AF, and the parameter information of the AF may include, for example, at least one of: capability information of the AF, an identifier of the AF, address information of the AF, or an identifier of an application corresponding to the AF. The capability information of the AF may indicate at least one of: whether the AF supports an execution of the VFL task, a time interval during which the AF supports the execution of the VFL task, whether the AF is available as an initiator of the VFL task, or a computing power of the AF.

When the second node is an AF, in a possible case, if the second node is a trusted AF, then the second node may directly transmit the parameter information of the second node to the first network element. In another possible case, if the second node is an untrusted third-party AF, then the second node may transmit (forward) the parameter information of the second node to the first network element via the NEF, and accordingly, the first network element may receive the parameter information of the second node via the NEF. In this case, the second node may map the parameter information of the second node to parameter information of a certain event (for example, which is recorded as a second event). In other words, the second node may generate the parameter information of the second event based on the parameter information of the second node. Further, the second node may transmit the parameter information of the second event to the NEF, and the NEF may forward the parameter information of the second event to the first network element, thereby realizing the transmission of the parameter information of the AF to the first network element.

That is, when the second node is an untrusted third-party AF, the operation that the second node transmits the parameter information of the second node to the first network element may include the following operation. The second node transmits the parameter information of the second event to the first network element via the NEF. The parameter information of the second event is generated based on the parameter information of the second node. Exemplarily, the parameter information of the second event may indicate at least one of: whether the AF supports an execution of the second event, a time interval during which the AF supports the execution of the second event, whether the AF is available as an initiator of the second event, a computing power of the AF, or an identifier of an application corresponding to the AF. Here, the second event is associated with the VFL task. In other words, the execution of the second event may be understood as the execution of the VFL task.

As an implementation, for each second node, the parameter information of the second node may be carried, for example, by second registration request information. The second registration request information is registration request information transmitted by the second node to the first network element. In other words, the second node may register the parameter information of the second node into the first network element by transmitting the second registration request information to the first network element.

In some embodiments, each of the second nodes may transmit the parameter information of the second node to the first network element before the first node initiates the VFL task, so that the first network element may receive the parameter information of respective second nodes before the first node initiates the VFL task. Further, when the first node initiates the VFL task, the method may further include the following operation. The first network element acquires capability information of at least one second node. For example, the first network element may acquire the capability information of each of the second nodes from the received parameter information of the second node. Further, for each second node, the first network element may determine whether the second node satisfies the condition for executing the VFL task based on the capability information of the second node.

In some embodiments, the first node may transmit (register) parameter information of the first node to the first network element. In this case, the method may further include the following operation. The first node transmits the parameter information of the first node to the first network element. The parameter information of the first node may include, for example, at least one of: capability information of the first node, an identifier of the first node, address information of the first node, or an identifier of an application corresponding to the first node.

Exemplarily, the capability information of the first node may indicate at least one of: whether the first node supports an execution of the VFL task, a time interval during which the first node supports the execution of the VFL task, whether the first node is available as an initiator of the VFL task, a computing power of the first node, or a service area of the first node.

It should be understood that the specific meanings of respective parameter information of the first node are the same as the meanings of respective parameter information corresponding to the second node, which may be referred to each other, and will not be repeated here.

When the first node is an AF, in a possible case, if the first node is a trusted AF, then the first node may directly transmit the parameter information of the first node to the first network element. In another possible case, if the first node is an untrusted third-party AF, the first node may transmit (forward) the parameter information of the first node to the first network element via the NEF, and accordingly, the first network element may receive the parameter information of the first node via the NEF. In this case, the first node may map the parameter information of the first node to parameter information of a certain event (for example, which is recorded as a first event). In other words, the first node may generate the parameter information of the first event based on the parameter information of the first node. Further, the first node may transmit the parameter information of the first event to the NEF, and the NEF may forward the parameter information of the first event to the first network element, thereby realizing the transmission of the parameter information of the AF to the first network element.

That is, when the first node is an untrusted third-party AF, the operation that the first node transmits the parameter information of the first node to the first network element may include the following operation. The first node transmits the parameter information of the first event to the first network element via the NEF. The parameter information of the first event is generated based on the parameter information of the first node. Exemplarily, the parameter information of the first event may indicate at least one of: whether the AF supports an execution of the first event, a time interval during which the AF supports the execution of the first event, whether the AF is available as an initiator of the first event, a computing power of AF, or an identifier of an application corresponding to the AF. Here, the first event is associated with the VFL task. In other words, the execution of the first event may be understood as the execution of the VFL task.

As an implementation, the parameter information of the first node may be carried, for example, by first registration request information. The first registration request information is registration request information transmitted by the first node to the first network element. In other words, the first node may register the parameter information of the first node into the first network element by transmitting the first registration request information to the first network element.

In operation S602, the first network element transmits first information to the first node. Accordingly, the first node receives the first information.

The first information indicates at least one second node satisfying a condition for executing the VFL task. The VFL task is initiated by the first node.

In the operation S602, the first network element may transmit the first information to the first node to indicate, to the first node, at least one second node satisfying the condition for executing the VFL task. In this way, the first node may know at least one second node satisfying the condition for executing the VFL task through the first information, thereby ensuring that the first node can find a suitable node to execute the VFL task.

As an example, the first information may, for example, carry an identifier and/or address information of at least one second node satisfying the condition for executing the VFL task.

In some embodiments, before the first network element transmits the first information to the first node, the method may further include the following operation. The first node transmits second information to the first network element. The second information is used to request the first information. Accordingly, the first network element may receive the second information from the first node.

That is, when the first node needs to discover at least one second node satisfying the condition for executing the VFL task, the first node may transmit the second information to the first network element to request the first information. After receiving the second information from the first node, the first network element may determine at least one second node satisfying the condition for executing the VFL task initiated by the first node based on the acquired capability information of respective second nodes, and feed back the first information to the first node, so as to indicate the at least one second node to the first node.

When the first node is an AF, in a possible case, if the first node is a trusted AF, then the first node may directly transmit the second information to the first network element. In another possible case, if the first node is an untrusted third-party AF, then the first node may transmit (forward) the second information to the first network element via the NEF, and accordingly, the first network element may receive the second information from the first node via the NEF.

Exemplarily, the second information may indicate at least one of: 1) an execution of a VFL task, in other words, a task type initiated by the first node is a VFL task; 2) a time interval during which the VFL task is executed, in other words, a time interval during which the first node expects to execute the VFL task, such as 9:00 to 21:00; 3) being an initiator of the VFL task, in other words, the first node expects to be the initiator of the VFL task; 4) a computing power requirement for executing the VFL task, such as the minimum computing power requirement for executing the VFL task initiated by the first node; or 5) a service area where the VFL task is executed, in other words, a service area where the first node expects to execute the VFL task.

For example, it is assumed that the second information indicates that the time interval during which the first node expects to execute the VFL task is 9:00 to 21:00, and the service area where the first node expects to execute the VFL task is the first service area, then after receiving the second information from the first node, the first network element may compare the capability information, of respective second nodes, stored by the first network element with the content of the second information, determine at least one second node that supports the execution of the VFL task from 9:00 to 21:00 and the service area of which includes the first service area, and transmit, to the first node, the information (such as an identifier and/or address information) of the at least one second node by carrying the information of the at least one second node in the first information.

In operation S603, the first node determines at least one participating node participating in the VFL task.

Exemplarily, the first node may determine at least one participating node participating in the VFL task from at least one second node satisfying the condition for executing the VFL task.

It should be understood that the phrase "satisfying the condition for executing the VFL task" mentioned in the embodiments of the disclosure refers to satisfying the condition for executing the VFL task initiated by the first node. For brevity, "at least one second node satisfying the condition for executing the VFL task" is hereinafter simply referred to as "at least one second node". In other words, "at least one second node" described hereinafter, without causing ambiguity, refers to "at least one second node satisfying the condition for executing the VFL task".

As an implementation, the operation of determining the at least one participating node participating in the VFL task from at least one second node includes the following operation. The second node that agrees to participate in the VFL task initiated by the first node is determined to be the participating node participating in the VFL task. In other words, if a certain second node satisfies the condition for executing the VFL task and agrees to participate in the VFL task initiated by the first node, the second node may be determined to be the participating node participating in the VFL task.

In some embodiments, for each of the at least one second node, the method may further include the following operation. The second node transmits third information to the first node. The third information indicates whether the second node agrees to participate in the VFL task initiated by the first node. Accordingly, the first node may receive the third information from the at least one second node. The first node may know, based on the third information, whether respective second nodes agree to participate in the VFL task initiated by the first node.

In some embodiments, the method further includes the following operation. The first node transmits data requirement information to the at least one second node. The data requirement information is used for determining data for executing the VFL task. Accordingly, each of the at least one second node receives the data requirement information from the first node.

The data requirement information includes a type of the data required for executing the VFL task, and/or a valid time of the required data. The type of the data may include a format of the data (for example, 8-bit quantization or 24-bit quantization), and may also include a type of data content (for example, application layer data, data related to a power of the device, data related to communication performance of the device, etc.).

For example, it is assumed that in the data requirement information, the type of data required for executing the VFL task is 8-bit quantized application layer data, and the valid time of the required data is a first time interval, then the second node that receives the data requirement information may determine, based on the data requirement information, local data that is valid in the first time interval and the type of which is the 8-bit quantized application layer data, to be the data for executing the VFL task.

In some embodiments, after receiving the data requirement information from the first node, the second node may decide whether to agree to participate in the VFL task initiated by the first node based on the local configuration or related policies. For example, the second node may agree to participate in the VFL task if data satisfying the corresponding data requirement exists locally in the second node, and the second node may refuse to participate in the VFL task if the data satisfying the corresponding data requirement does not exist locally in the second node. Furthermore, the second node replies to the first node with a decision on whether to agree to participate in the VFL task through the third information.

When the first node is an AF, in a possible case, if the first node is a trusted AF, then the first node may directly transmit the data requirement information to the at least one second node. In another possible case, if the first node is an untrusted third-party AF, then the first node may transmit (forward) the data requirement information to at least one second node via the NEF, and accordingly, the second node may receive the data requirement information from the first node via the NEF.

In operation S604, the first node transmits a VFL model to the participating node. Accordingly, the participating node receives the VFL model.

The participating node may be understood as the second node determined to be a participating node, or may be understood as the second node participating in the VFL task initiated by the first node. When the first node is the AF, the operation that the first node transmits the VFL model to the participating node may mean that a server corresponding to the first node (that is, a server corresponding to the AF) transmits the VFL model to the participating node.

In the operation S603, the first node may determine, from the at least one second node, at least one participating node participating in the VFL task. Here, each participating node may correspond to a respective VFL model. In the operation S604, the first node may transmit a respective VFL model to each of the participating nodes, and the VFL model may be used for executing the VFL task. In a possible implementation, the VFL model may include, for example, information of the participating node (such as an identifier and/or address information of the participating node) corresponding to the VFL model.

The VFL model corresponding to a certain participating node may be understood as the VFL model required by the participating node. The VFL model may be used as an initial model when the participating node executes the VFL task. As an implementation, the VFL model required by the participating node may be generated by the first node. For example, if the participating node includes a terminal device, an access network element, and a core network element, the first node may generate a VFL model required by the terminal device for the terminal device, may generate a VFL model required by the access network element for the access network element, and may generate a VFL model required by the core network element for the core network element. Furthermore, the first node may transmit the VFL model required by each of the participating nodes to the participating node.

In some scenarios, the first node cannot directly transmit the VFL model to the corresponding participating node. In this case, the first node may forward the VFL model corresponding to the participating node to the participating node via a certain (or several) intermediate device(s).

For example, when the first node is an AF and the participating node is a terminal device or an access network device, the AF cannot directly transmit the VFL model to the terminal device or the access network device. In this case, the operation that the first node transmits the VFL model corresponding to the participating node to the participating node may include the following operation. The first node transmits the VFL model corresponding to the terminal device or the access network element to the terminal device or the access network element via a second network element. Here, the second network element may be a single network element or may include two or more network elements, which is not limited in the embodiments of the disclosure. As an implementation, after receiving the VFL model, the second network element may forward the VFL model to the participating node corresponding to the VFL model based on the identifier and/or address information of the participating node carried in the VFL model. For example, if the VFL model #1 carries the identifier and address information of the terminal device, the first node may transmit the VFL model #1 to the terminal device based on the identifier and address information of the terminal device. For another example, if the VFL model #2 carries the identifier and address information of the access network element, the first node may transmit the VFL model #2 to the access network element based on the identifier and address information of the access network element.

It should be noted that, in some scenarios, if the first node may directly transmit the VFL model to the participating node corresponding to the VFL model without forwarding it through an intermediate device, the VFL model may not need to carry the information (such as the identifier and/or address information) of the participating node.

In some embodiments, the method may further include the following operation. The first node transmits a same association identifier to the at least one participating node. The association identifier may be used to identify different execution results of the same VFL task, and may further be used to aggregate the different execution results of the same VFL task. Accordingly, the second node may receive the association identification from the first node. As an implementation, the first node may transmit the VFL model and the association identifier to the corresponding participating node through the same piece of information.

The different execution results of the same VFL task may include, for example, execution results generated by different nodes (such as the first node, or the second node determined to be the participating node) when executing the same VFL task.

In a possible implementation, the execution result may include a model training result and a model inference result. In this case, the association identifier may include a model association identifier and a result association identifier. The model association identifier may be used to identify and/or aggregate different model training results for the same VFL task, and the result association identifier may be used to identify and/or aggregate different model inference results for the same VFL task.

In the embodiments of the disclosure, when each of the participating nodes receives a respective VFL model, the received VFL model may be used as an initial model for executing the VFL task, and data for executing the VFL task determined based on the data requirement information in the operation S603 may be used as input data. Also, the first node may generate (acquire) a VFL model corresponding to the first node, and may determine local data for the first node to execute the VFL task. Further, the respective participating nodes and the first node may jointly execute the VFL task initiated by the first node based on the respective VFL models and the respective local data.

In some embodiments, after the execution of the VFL task is completed, the method may further include the following operation. Each of the participating nodes (that is, the second nodes participating in the VFL task) transmits an execution result of the participating node executing the VFL task to the first node. The execution results may carry an association identifier. It should be noted that when the first node is an AF, the operation of transmitting the execution result of the participating node executing the VFL task to the first node may be understood to be transmitting the execution result of the participating node executing the VFL task to the server corresponding to the first node (that is, the server corresponding to the AF).

In a possible case, the participating node may directly transmit the execution result of the participating node executing the VFL task to the first node. In another possible case, a certain participating node (hereinafter referred to as a participating node #1) cannot directly transmit the execution result to the first node. In this case, the participating node #1 may firstly transmit the execution result of the participating node #1 to an intermediate node (such as a participating node #2), and then the intermediate node may forward the execution result of the participating node #1 to the first node.

For example, the intermediate node is the participating node #2. In the first implementation (hereinafter referred to as an implementation #1), after receiving the execution result of the participating node #1, the participating node #2 may transmit the execution result of the participating node #1 to the first node, and the participating node #2 may also transmit its own execution result to the first node. The execution results of the participating node #1 and the participating node #2 both carry the same association identifier.

In the second implementation (hereinafter referred to as an implementation #2), the participating node #2 may further aggregate the execution result of the participating node #2 and the received execution result of the participating node #1, and then transmit the obtained aggregation result to the first node. As an example, both the execution results of the participating node #1 and the participating node #2 may carry the same association identifier, so that when the participating node #2 aggregates the execution results, the execution results having the same association identifier (the execution results of the participating node #1 and the participating node #2) may be aggregated, thereby ensuring that the execution results of the same VFL task are aggregated, and thus ensuring the correct aggregation of the execution results. The association identifier may also be included in the obtained aggregation result.

In the third implementation (hereinafter referred to as an implementation #3), the participating node #2 may receive an execution result of another participating node (hereinafter referred to as a participating node #3) in addition to the execution result of the participating node #1, and may aggregate the execution results of the participating node #1, the participating node #2, and the participating node #3, and then transmit the obtained aggregation result to the first node. As an example, the execution results of the participating node #1, the participating node #2, and the participating node #3 may carry the same association identifier, so that when the participating node #2 aggregates the execution results, the execution results having the same association identifier (the execution results of the participating node #1, the participating node #2, and the participating node #3) may be aggregated, thereby ensuring that the execution results of the same VFL task are aggregated, and thus ensuring the correct aggregation of the execution results. The association identifier may also be included in the obtained aggregation result.

That is, for a certain second node (for example, the participating node #2) participating in the VFL task, in the above implementation #2 and implementation #3, the method may further include the following operations. An execution result (for example, which is recorded as a second execution result) of at least one participating node (for example, the participating node #1 and/or the participating node #3) executing the VFL task is received. An aggregation result is transmitted to the first node. The aggregation result is obtained by aggregating the execution result (i.e., at least one second execution result) of at least one participating node executing the VFL task and an execution result (for example, which is recorded as a third execution result) of the second node executing the VFL task. The aggregation result may carry an association identifier. In a possible implementation, each execution result (i.e., each second execution result) of the at least one participating node executing the VFL task and the execution result (i.e., the third execution result) of the second node executing the VFL task carry the same association identifier, so that the aggregation result may be obtained by aggregating based on the same association identifier.

Accordingly, the first node may receive an execution result (for example, which is recorded as a first execution result) corresponding to the VFL task initiated by the first node. The first execution result includes: an execution result of at least one participating node executing the VFL task (for example, the execution result obtained by the above implementation #1, for example, which is recorded as the second execution result), and/or at least one aggregation result. Each of the at least one aggregation result is obtained (for example, obtained by the implementation #2 or the implementation #3 described above) by aggregating the execution results of at least two participating nodes executing the VFL task (i.e., at least two second execution results). Each execution result (that is, each second execution result) of the at least one participating node executing the VFL task and/or each of the at least one aggregation result carries(carry) the same association identifier, and each of the at least one aggregation result may be obtained by aggregating based on the same association identifier.

In some embodiments, the method may further include the following operation. The first node aggregates the execution result corresponding to the VFL task and an execution result of the first node executing the VFL task, that have the same association identifier.

As an example, after receiving the execution result corresponding to the VFL task initiated by the first node, the first node may aggregate the execution result corresponding to the VFL task and the execution result of the first node itself to obtain a final aggregation result. Both the execution result corresponding to the VFL task received by the first node and the execution result of the first node itself carry the same association identifier, so that when the first node aggregates the execution results, the execution results have the same association identifier (the execution result corresponding to the VFL task received by the first node and the execution result of the first node itself) may be aggregated. In this way, it is ensured that the execution results of the same VFL task are aggregated, and thereby ensuring that the execution results can be correctly aggregated.

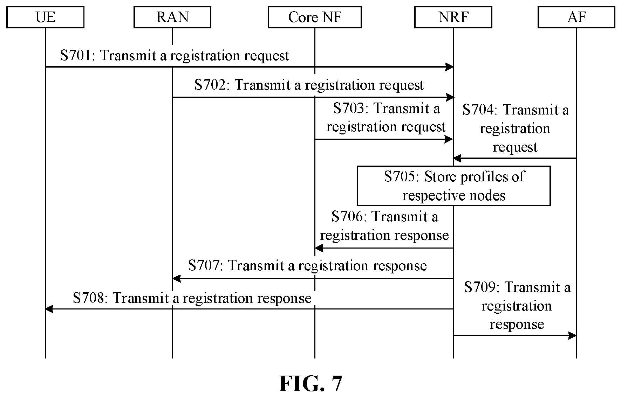

The communication methods provided by the embodiments of the disclosure have been described above with reference to FIG. 5 and FIG. 6. In order to facilitate understanding of the embodiments of the disclosure, possible implementation flows of the communication methods provided by the embodiments of the disclosure will be described below with reference to FIG. 7 to FIG. 9. For convenience of illustration, in the following examples, it is assumed that the first network element is an NRF, the first node is an AF, and the second nodes include UE, a RAN, and a core NF (or referred to as a core network element). Here, the number of the UEs, the RANs, or the core NFs may be one or more (two or more than two), which is not limited in the embodiments of the disclosure.

In order to execute the VFL, a node acting as an initiator firstly needs to discover a node with a capability of executing the VFL, in other words, a node satisfying a condition for executing the VFL task. For this reason, before starting to execute the VFL task, respective nodes need to register their own information into the NRF. For example, the AF is the initiator, and the UE, the RAN, and the core network element need to register a capability of whether they can support the VFL into the NRF, so that the AF may discover a suitable node via the NRF to execute the VFL task.

FIG. 7 is a first schematic diagram illustrating a possible implementation flow of a communication method according to an embodiment of the disclosure. The implementation flow may include the following operations.

In operation S701, the UE transmits a registration request to the NRF.

The UE may register information of the UE into the NRF by transmitting a registration request to the NRF. As an example, the registration request carries a profile of the UE (corresponding to the parameter information of the terminal in the above embodiments), and the profile of the UE includes, but is not limited to, at least one of: a UE ID, a capability about whether the UE can support the VFL, a time interval during which the UE can support the VFL, a type of the UE, address information (such as an IP address) of the UE, an indication as to whether the UE can support being an initiator of the VFL, or computing power information of the UE.

In operation S702, the RAN transmits a registration request to the NRF.

The RAN may register information of the RAN into the NRF by transmitting a registration request to the NRF. As an example, the registration request carries a profile of the RAN (corresponding to the parameter information of the access network element in the above embodiments), and the profile of the RAN includes, but is not limited to, at least one of: an ID of the RAN (for example, a gNB ID), a capability about whether the RAN can support the VFL, a time interval during which the RAN can support the VFL, address information of the RAN, an indication as to whether the RAN can support being an initiator of the VFL, computing power information of the RAN, or a service area (a coverage area) information of the RAN.

In operation S703, the core NF transmits a registration request to the NRF.

The core NF may register information of the core NF into the NRF by transmitting a registration request to the NRF. As an example, the registration request carries a profile of the core NF (corresponding to the parameter information of the core network element in the above embodiments), and the profile of the core NF includes, but is not limited to, at least one of: a type of the NF, a capability about whether the NF can support the VFL, a time interval during which the NF can support the VFL, address information of the NF, an indication as to whether the NF can support being an initiator of the VFL, computing power information of the NF, or service area information of the NF.

In operation S704, the AF transmits a registration request to the NRF.

The AF may register information of the AF into the NRF by transmitting a registration request to the NRF. As an example, the registration request carries a profile of the AF (corresponding to the parameter information of the AF in the above embodiments), and the profile of the AF includes, but is not limited to, at least one of: an AF ID, an ID of an application (Application ID) corresponding to the AF, a capability about whether the AF can support the VFL, a time interval during which the AF can support the VFL, address information of the AF, an indication as to whether the AF can support being an initiator of the VFL, or computing power information of the AF.

It should be noted that when the AF is an untrusted third-party AF, the AF may register the information into the NRF via the NEF. For example, the AF may firstly transmit the profile of the AF to the NEF, the NEF generates an NEF profile, and the NEF registers the NEF profile into the NRF. The NEF may map the information of the AF to information of an event, in other words, to an ID of the event, so that the NEF may register the information of the event (corresponding to the parameter information of the first event in the above embodiments) into the NRF as the NEF profile. As an example, the information of the event includes, but is not limited to, at least one of: an NEF ID, a capability about whether the AF can support the VFL, an ID of an application corresponding to the AF, a time interval supported by the event, an indication as to whether the AF can support being an initiator of the event, or computing power information of the AF.

It should be understood that the execution order of the operations S701 to S704 is not limited in the present embodiment.

In operation S705, the NRF stores the profiles of respective nodes.

After receiving the registration requests from respective nodes (UE, RAN, core NF and AF), the NRF may store the profiles of respective nodes and mark respective nodes as available valid nodes. Thereafter, the NRF may transmit registration responses to respective nodes for replying that the registrations of respective nodes are accepted. The operation that the NRF transmits the registration responses to respective nodes may include the following operations S706 to S709.

In operation S706, the NRF transmits a registration response to the core NF.

In operation S707, the NRF transmits a registration response to the RAN.

In operation S708, the NRF transmits a registration response to the UE.

In operation S709, the NRF transmits a registration response to the AF.

It should be understood that the execution order of the operations S706 to S709 is not limited in the present embodiment.

Respective nodes may register their own information into the NRF through the implementation flow illustrated in FIG. 7, so that when executing the VFL task, the node acting as the initiator can discover a suitable node via the NRF to execute the VFL task.

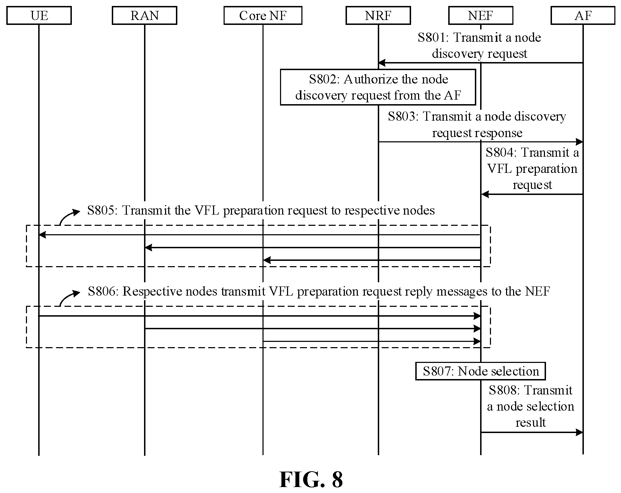

FIG. 8 is a second schematic diagram of a possible implementation flow of a communication method according to an embodiment of the disclosure. As an implementation, the implementation flow illustrated in FIG. 8 may be executed after the implementation flow illustrated in FIG. 7, that is, in the implementation flow illustrated in FIG. 8, it may be considered that information of respective nodes has been registered into the NRF. As illustrated in FIG. 8, the implementation flow may include the following operations.

In operation S801, the AF transmits a node discovery request (corresponding to the second information in the above embodiments) to the NRF.

For example, when the AF is the initiator of the VFL task and the AF wants to discover a node that can execute the VFL task, the AF may transmit the node discovery request to the NRF. As an example, the node discovery request may include, but is not limited to, at least one of: an indication for executing the VFL, a time interval during which the VFL is desired to be executed, an indication for being desired to be an initiator of the VFL, or a service area where the VFL is desired to be executed.

In some embodiments, when the AF is the third-party AF, the AF may transmit the node discovery request to the NRF via the NEF, and the same parameters are included in the node discovery request.

In operation S802, the NRF authorizes the node discovery request from the AF.

In this operation, the NRF may authorize the node discovery request from the AF. As an implementation, before authorizing the node discovery request from the AF, the NRF may firstly determine whether the AF can support VFL and whether the AF can support being an initiator of the VFL based on the profile of the AF. Further, if the AF can support the VFL and can support being the initiator of the VFL, the node discovery request from the AF is authorized.

In operation S803, the NRF transmits a node discovery request response (corresponding to the first information in the above embodiments) to the AF.

Since the NRF has already stored the profiles of the relevant nodes, the NRF may determine, based on the information carried in the node discovery request in the operation S801, the node satisfying the condition (such as the UE, the RAN, and the core NF satisfying the condition) for the AF, and reply the information of the node satisfying the condition (such as the ID and/or address information of the node) to the AF through the node discovery request response.

Here, the "node satisfying the condition" may be understood as a node satisfying the condition included in the node discovery request, or may also be understood as a node satisfying the condition for executing the VFL task initiated by the AF. For convenience of explanation, it is assumed below that the UE, the RAN, and the core NF are nodes satisfying the condition.

In some embodiments, when the AF is the third-party AF, the NRF may transmit the node discovery request response to the AF via the NEF.

In operation S804, the AF transmits a VFL preparation request to the NEF.

When the AF is the third-party AF, the AF may transmit the VFL preparation request to the NEF, and then the NEF forwards the VFL preparation request to respective nodes. The VFL preparation request may include the type of data required for executing the VFL task, the valid time of the data, and the like (corresponding to the data requirement information in the above embodiments).

In operation S805, the NEF transmits the VFL preparation request to respective nodes.

After receiving the VFL preparation request from the AF, the NEF may transmit the VFL preparation request to respective nodes that satisfy the condition (as illustrated in FIG. 8, the NEF may transmit the VFL preparation request to the UE, the RAN, and the core NF, respectively), so that respective nodes can prepare the data required for executing the VFL task in advance based on the type of data required for executing the VFL task and the valid time of the data carried in the VFL preparation request.

In operation S806, respective nodes transmit VFL preparation request reply messages (corresponding to the third information in the above embodiments) to the NEF.

After receiving the VFL preparation request, respective nodes may determine whether to join the VFL task based on the local configurations, and reply, to the NEF, the decisions as to whether to agree to join. For example, the decision may be carried in the VFL preparation request reply message. In other words, each of the VFL preparation request reply messages may indicate whether a respective node agrees to join the VFL task initiated by the AF.

In operation S807, the NEF performs node selection.

The NEF may perform the node selection for the VFL based on the VFL preparation request reply messages fed back by respective nodes and the request from the AF. For example, the NEF may select a node that satisfies the condition for executing the VFL task initiated by the AF and agrees to join the VFL task.

In operation S808, the NEF transmits a node selection result to the AF.

In this operation, the NEF may return the node selection result in the operation S807 to the AF. The node selection result may include information of the selected node, such as the ID and/or address information of the node, so that the AF may determine the selected node to be a participating node participating in the VFL task.

It should be noted that the operations S804 to S808 are exemplarily described with the AF as the third-party AF. When the AF is a trusted AF, the AF may directly transmit the VFL preparation request to respective nodes (such as the UE, the RAN, and the core NF) that satisfy the condition, and then respective nodes that satisfy the condition may directly transmit the VFL preparation request reply messages to the AF. Each of the VFL preparation request reply messages may indicate whether a respective node agrees to join the VFL task initiated by the AF. Furthermore, the AF may determine the node, that satisfies the condition and agrees to join the VFL task, to be the participating node participating in the VFL task.

Through the implementation flow illustrated in FIG. 8, the AF may discover and determine a suitable node for the VFL task by transmitting the node discovery request to the NRF.

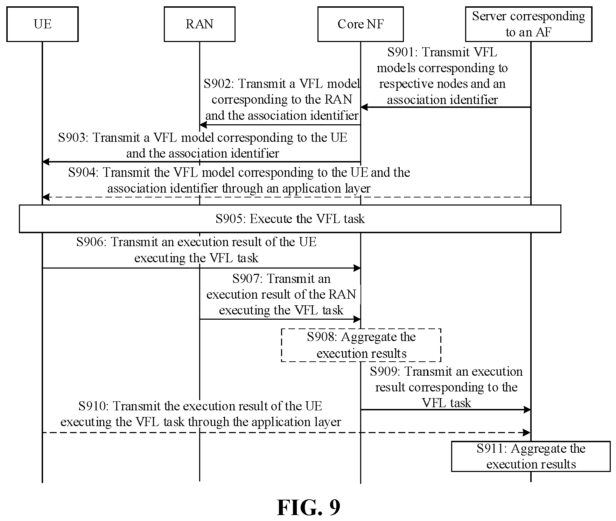

FIG. 9 is a third schematic diagram of a possible implementation flow of a communication method according to an embodiment of the disclosure. As an implementation, the implementation flow illustrated in FIG. 9 may be executed after the implementation flow illustrated in FIG. 8, that is, in the implementation flow illustrated in FIG. 9, it may be considered that the AF has determined the nodes participating in the VFL task. In the following implementation flow, it is assumed that the participating nodes determined by the AF are the UE, the RAN, and the core NF. As illustrated in FIG. 9, the implementation flow may include the following operations.

In operation S901, a server corresponding to the AF transmits, to the core NF, VFL models corresponding to respective nodes and an association identifier.

The VFL model corresponding to each of the nodes may be used as an initial model for the node to execute the VFL task.

In this operation, the server corresponding to the AF may firstly transmit the VFL models required by (corresponding to) respective nodes (UE, RAN, core NF) participating in the VFL task to the core NF. Each model may carry information of the node corresponding to the model. For example, if the model required by the UE is a model #1 and the model required by the RAN is a model #2, then the model #1 may carry information of the UE (such as an ID and/or address information of the UE) to indicate that the model #1 needs to be transmitted to the UE for use, and the model #2 may carry information of the RAN (such as an ID and/or address information of the RAN) to indicate that the model #2 needs to be transmitted to the RAN for use.

In this operation, the AF may further transmit the same association identifier (an association ID) to respective nodes. The VFL needs to use local models and data on different nodes for model training and result inference, and aggregation is performed at the initiator. Therefore, the AF may transmit the same association identifier to respective nodes in order to facilitate the association of execution results (including model training results and/or inference results) of the VFL generated by respective nodes, so that each node may add the association identifier to the execution result of the VFL of the node after calculating and obtaining the execution result of the VFL. In this way, it is ensured that the results generated for the same VFL task at different nodes have the same association identifier, and further ensured that the aggregation node performs a correct aggregation on the execution results of the VFL obtained by respective nodes. The "aggregation node" may also be understood as a node that aggregates the execution results of the VFL from at least two nodes.

As an implementation, the association identifier may be carried, for example, in the VFL model corresponding to each node.

In operation S902, the core NF transmits a VFL model corresponding to the RAN and an association identifier to the RAN.

After obtaining the VFL model required by (corresponding to) the RAN and the association identifier, the core NF may transmit the VFL model and the association identifier to the RAN based on the information of the RAN (such as the ID and/or address information of the RAN) carried by the VFL model.

**In** operation S903, the core NF transmits a VFL model corresponding to the UE and an association identifier to the UE.

After obtaining the VFL model required by (corresponding to) the UE and the association identifier, the core NF may transmit the VFL model and the association identifier to the UE based on the information of the UE (such as the ID and/or address information of the UE) carried by the VFL model. As an implementation, the core NF may transmit the VFL model corresponding to the UE and the association identifier to the UE via the RAN.

In some embodiments, the server corresponding to the AF may directly transmit the VFL model corresponding to the UE and the association identifier to the UE through the application layer. In this case, the implementation flow further includes the operation S904.

In operation S904, the server corresponding to the AF transmits the VFL model corresponding to the UE and the association identifier to the UE through the application layer.

It may be understood that in case that the operation S904 is performed, the server corresponding to the AF may not need to transmit the VFL model corresponding to the UE to the core NF in the operation S901, and in this case, the operation S903 may not need to be performed.

In operation S905, respective nodes execute the VFL task.

After the VFL models are issued, respective nodes may perform federated learning for the same task based on the association identifier. For example, in the process of executing the VFL task, respective nodes may need to interact with intermediate results (such as gradients, losses, etc.). Since the results generated by respective nodes have the same association identifier, it may be ensured that respective nodes perform the federated learning for the same task by processing the results with the same association identifier.

In operation S906, the UE transmits an execution result of the UE executing the VFL task to the core NF.

After the execution of the VFL task is completed, the UE may transmit the obtained execution result to the core NF, and the execution result may carry the association identifier.

In operation S907, the RAN transmits an execution result of the RAN executing the VFL task to the core NF.

After the execution of the VFL task is completed, the RAN may transmit the obtained execution result to the core NF, and the execution result may carry the association identifier.

**In** some embodiments, the implementation flow further includes the operation S908.

In operation S908, the core NF aggregates the execution results.

After receiving the execution results from the UE and the RAN executing the VFL task, the core NF may aggregate the execution results having the same association identifier (the execution results of the UE, the RAN, and the core NF itself) based on the association identifier, and then transmit an aggregation result to the server corresponding to the AF in the operation S909.

It should be understood that, in some embodiments, after receiving the execution results from the UE and the RAN, the core NF may not aggregate the execution results, but may directly transmit the received execution results (the execution results of the UE and the RAN) and the execution result generated by the core NF to the server corresponding to the AF.

In operation S909, the core NF transmits the execution result corresponding to the VFL task to the server corresponding to the AF.

In a possible case, after receiving the execution results of the UE and the RAN executing the VFL task, the core NF aggregates the execution results of respective nodes. In this operation, the execution result corresponding to the VFL task may be an aggregation result obtained by aggregating the execution results of respective nodes, and the aggregation result carries the association identifier.

In another possible case, after receiving the execution results of the UE and the RAN executing the VFL task, the core NF does not aggregate the execution results of respective nodes. In this case, the execution result corresponding to the VFL task may include the execution results of respective nodes, such as the execution results of the UE, the RAN, and the core NF, and the execution results of respective nodes carry the same association identifier.

It should be noted that, in some embodiments, the UE may directly transmit the execution result of the UE to the server corresponding to the AF through the application layer, and carry the association identifier in the execution result. In this case, the implementation flow may further include the operation S910.

In the operation S910, the UE transmits an execution result of the UE executing the VFL task to the server corresponding to the AF through the application layer.

It may be understood that in case that the operation S910 is performed, the operation S906 may not need to be performed, and when the core NF aggregates the execution results of respective nodes in the operation S908, the execution result of the UE may not need to be aggregated.

In operation S911, the server corresponding to the AF aggregates the execution results.

In this operation, the server corresponding to the AF may aggregate the results generated by all nodes to obtain a final result for the VFL. For example, in case that the core NF aggregates the execution results of the UE, the RAN, and the core NF, the server corresponding to the AF may aggregate the aggregation result obtained by the core NF and the execution result generated by the server corresponding to the AF itself based on the association identifier, to obtain the final execution result for the VFL task. The aggregation result obtained by the core NF and the execution result generated by the server corresponding to the AF itself have the same association identifier.

With the implementation flow illustrated in FIG. 9, the AF may transmit the initial VFL models to respective nodes participating in the VFL task, and may associate the execution results of respective nodes executing the VFL task through the association identifier, and then aggregate the associated execution results of the respective nodes to obtain the final execution result for the VFL task.

It should be understood that the AF serving as the initiator of the VFL task in the above flows is merely an example, and in the technical solutions of the embodiments of the disclosure, any node may serve as the initiator of the VFL task. As an implementation, in a practical application scenario of the VFL, since the UE or the AF may have a label, the UE or the AF may usually be the initiator of the VFL task.

The embodiments of the disclosure introduce the processes in which respective nodes register, the initiator discovers and determines participating nodes, the initial model is transmitted, and the execution results are aggregated, which realizes the support of the network architecture for the cross-domain VFL.

In the solutions of the embodiments of the disclosure, firstly, respective nodes may register their own information related to the VFL into the NRF to ensure that the initiator can discover a suitable node. Then, the initiator may discover respective nodes that can participate in the VFL via the NRF. Furthermore, the initiator may transmit the initial models and the association identifier to respective nodes to ensure that respective nodes perform the same VFL task and the results are correctly aggregated. This solution solves the following technical problems that have not been solved at present: 1) how the node acting as the initiator (such as the UE or the AF) selects a suitable node in other domains to execute the VFL; 2) how the initiator transmits the initial models to respective nodes for model training and/or result inference; 3) how the initiator associates the training/inference results generated by respective nodes.

With the solutions in the embodiments of the disclosure, the initiator may unite nodes in multiple domains to execute the VFL while preventing data from leaving the local domain, so that a research object (such as an experience of the UE) can be comprehensively analyzed and predicted by uniting more dimensional data, and the research content (such as the experience of the UE) can be optimized in respective domains.

The embodiments of the disclosure provide corresponding communication apparatuses based on the above embodiments.

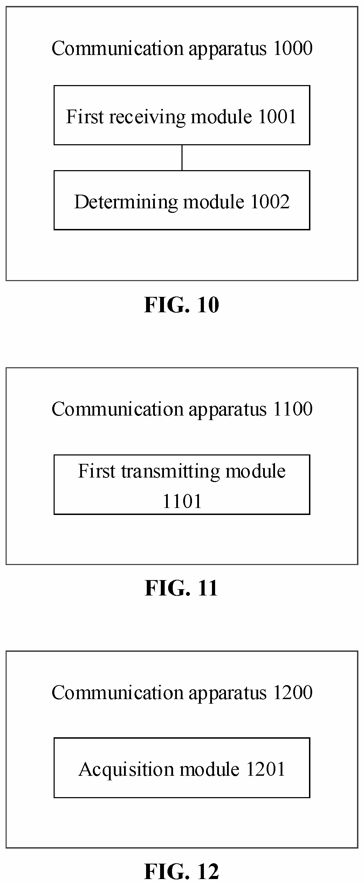

FIG. 10 is a first schematic diagram of a structural composition of a communication apparatus according to an embodiment of the disclosure. The communication apparatus is applied to a first node. As illustrated in FIG. 10, the communication apparatus 1000 includes a first receiving module 1001 and a determining module 1002.

The first receiving module 1001 is configured to receive first information from a first network element. The first information indicates at least one second node satisfying a condition for executing a VFL task. The determining module 1002 is configured to determine, from the at least one second node, at least one participating node participating in the VFL task.

In some embodiments, whether the second node satisfies the condition for executing the VFL task is determined by the first network element based on capability information of the second node. The capability information of the second node indicates at least one of: whether the second node supports an execution of the VFL task; a time interval during which the second node supports the execution of the VFL task; whether the second node is available as an initiator of the VFL task; a computing power of the second node; or a service area of the second node.

In some embodiments, parameter information of the at least one second node is collected or determined by the first network element. For each of the at least one second node, the parameter information of the second node includes at least one of: the capability information of the second node; an identifier of the second node; address information of the second node; or an identifier of an application corresponding to the second node.

In some embodiments, for each of the at least one second node, the parameter information of the second node is carried by second registration request information, and the second registration request information is registration request information transmitted by the second node to the first network element.

In some embodiments, the apparatus 1000 may further include a first transmitting module. The first transmitting module is configured to transmit parameter information of the apparatus 1000 to the first network element before receiving the first information from the first network element. The parameter information of the apparatus 1000 includes at least one of: capability information of the apparatus 1000; an identifier of the apparatus 1000; address information of the apparatus 1000; or an identifier of an application corresponding to the apparatus 1000. The capability information of the apparatus 1000 indicates at least one of: whether the apparatus 1000 supports an execution of the VFL task; a time interval during which the apparatus 1000 supports the execution of the VFL task; whether the apparatus 1000 is available as an initiator of the VFL task; a computing power of the apparatus 1000; or a service area of the apparatus 1000.

In some embodiments, the apparatus 1000 is an application function (AF), and the first transmitting module is specifically configured to: transmit parameter information of a first event to the first network element via a network exposure function (NEF). The parameter information of the first event is generated based on the parameter information of the apparatus 1000. The parameter information of the first event indicates at least one of: whether the AF supports an execution of the first event; a time interval during which the AF supports the execution of the first event; whether the AF is available as an initiator of the first event; a computing power of AF; or an identifier of an application corresponding to the AF. The first event is associated with the VFL task.

In some embodiments, the parameter information of the apparatus 1000 is carried by first registration request information, and the first registration request information is registration request information transmitted by the apparatus 1000 to the first network element.

In some embodiments, the apparatus 1000 may further include a second transmitting module. The second transmitting module is configured to transmit second information to the first network element before receiving the first information from the first network element. The second information is used for requesting the first information.

In some embodiments, the apparatus 1000 is an AF, and the second transmitting module is specifically configured to transmit the second information to the first network element via an NEF.

In some embodiments, the second information indicates at least one of: an execution of the VFL task; a time interval during which the VFL task is executed; being an initiator of the VFL task; a computing power requirement for executing the VFL task; or a service area where the VFL task is executed.

In some embodiments, the determining module 1002 is specifically configured to determine the second node that agrees to participate in the VFL task to be the participating node participating in the VFL task.

In some embodiments, the apparatus 1000 further includes a third transmitting module. The third transmitting module is configured to transmit data requirement information to the at least one second node. The data requirement information is used for determining data for executing the VFL task, and the data requirement information includes a type of the data required for executing the VFL task, and/or a valid time of the required data.

In some embodiments, the apparatus 1000 further includes a second receiving module. The second receiving module is configured to receive third information from the at least one second node. The third information indicates whether the second node agrees to participate in the VFL task.

In some embodiments, the apparatus 1000 is an AF, and the third transmitting module is specifically configured to transmit the data requirement information to the at least one second node via an NEF.

In some embodiments, the apparatus 1000 may further include a fourth transmitting module. The fourth transmitting module is configured to transmit, to the at least one participating node, a VFL model corresponding to the at least one participating node. The VFL model is used for executing the VFL task. The VFL model includes an identifier and/or address information of the participating node corresponding to the VFL model.

In some embodiments, the apparatus 1000 is an AF, and the participating node is a terminal device or an access network element. The fourth transmitting module is specifically configured to transmit, to the terminal device or the access network element, a VFL model corresponding to the terminal device or the access network element via a second network element.

In some embodiments, the apparatus 1000 may further include a fifth transmitting module. The fifth transmitting module is configured to transmit, to the at least one participating node, an association identifier for aggregating different execution results of the same VFL task.

In some embodiments, the apparatus 1000 may further include a third receiving module. The third receiving module is configured to receive a first execution result corresponding to the VFL task. The first execution result includes: a second execution result of the at least one participating node executing the VFL task, and/or at least one aggregation result. Each of the at least one aggregation result is obtained by aggregating at least two second execution results.

In some embodiments, each second execution result and/or each of the at least one aggregation result carries(carry) the same association identifier.

In some embodiments, each of the at least one aggregation result is obtained by aggregating based on the same association identifier.

In some embodiments, the apparatus 1000 may further include an aggregation module. The aggregation module is configured to aggregate the execution result corresponding to the VFL task and an execution result of the apparatus 1000 executing the VFL task, that have the same association identifier.

In some embodiments, the apparatus 1000 is a terminal device, an access network element, a core network element, or an AF.

In some embodiments, the second node includes at least one of: a terminal device, an access network element, a core network element, or an AF.

In some embodiments, the first network element is a network repository function (NRF).

FIG. 11 is a second schematic diagram of a structural composition of a communication apparatus according to an embodiment of the disclosure. The communication apparatus is applied to a second node. As illustrated in FIG. 11, the communication apparatus 1100 includes a first transmitting module 1101.

The first transmitting module 1101 is configured to transmit capability information of the apparatus 1100 to a first network element. The capability information of the apparatus 1100 is used for determining whether the apparatus 1100 satisfies a condition for executing a VFL task.

In some embodiments, the capability information of the apparatus 1100 indicates at least one of: whether the apparatus 1100 supports an execution of the VFL task; a time interval during which the apparatus 1100 supports the execution of the VFL task; whether the apparatus 1100 is available as an initiator of the VFL task; a computing power of the apparatus 1100; or service area information of the apparatus 1100.

In some embodiments, the apparatus 1100 may further include a second transmitting module. The second transmitting module is configured to transmit parameter information of the apparatus 1100 to the first network element. The parameter information of the apparatus 1100 includes at least one of: the capability information of the apparatus 1100; an identifier of the apparatus 1100; address information of the apparatus 1100; or an identifier of an application corresponding to the apparatus 1100.

In some embodiments, the apparatus 1100 is an application function (AF), and the second transmission module is specifically configured to transmit parameter information of a second event to the first network element via a network exposure function (NEF). The parameter information of the second event is generated based on the parameter information of the apparatus 1100. The parameter information of the second event indicates at least one of: whether the AF supports an execution of the second event; a time interval during which the AF supports the execution of the second event; whether the AF is available as an initiator of the second event; a computing power of AF; or an identifier of an application corresponding to the AF. The second event is associated with the VFL task.

In some embodiments, the parameter information of the apparatus 1100 is carried by second registration request information, and the second registration request information is registration request information transmitted by the apparatus 1100 to the first network element.

In some embodiments, the apparatus 1100 further includes a first receiving module. The first receiving module is configured to receive data requirement information from a first node. The data requirement information is used for determining data for executing the VFL task, and the data requirement information includes: a type of the data required for executing the VFL task, and/or a valid time of the required data.

In some embodiments, the apparatus 1100 further includes a third transmitting module. The third transmitting module is configured to transmit third information to the first node. The third information indicates whether the apparatus 1100 agrees to participate in the VFL task.

In some embodiments, the first node is an AF, and the first receiving module is specifically configured to receive the data requirement information from the first node via an NEF.

In some embodiments, the apparatus 1100 may further include a second receiving module. The second receiving module is configured to receive a VFL model from the first node. The VFL model is used for executing the VFL task. The VFL model corresponds to the apparatus 1100, and the VFL model includes an identifier and/or address information of the apparatus 1100.

In some embodiments, the apparatus 1100 may further include a third receiving module. The third receiving module is configured to receive, from the first node, an association identifier for aggregating different execution results of the same VFL task.

In some embodiments, the apparatus 1100 may further include a third transmitting module. The third transmitting module is configured to transmit, to the first node, an execution result of the apparatus 1100 executing the VFL task. The execution result carries the association identifier.

In some embodiments, the apparatus 1100 may further include a fourth receiving module and a fourth transmitting module. The fourth receiving module is configured to receive second execution result of at least one participating node executing the VFL task. The fourth transmitting module is configured to transmit an aggregation result to the first node. The aggregation result is obtained by aggregating at least one second execution result and a third execution result of the apparatus 1100 executing the VFL task. The aggregation result carries the association identifier.

In some embodiments, each of the at least one second execution result and the third execution result carries the same association identifier, and the aggregation result is obtained by aggregating based on the same association identifier.

In some embodiments, the first node is a terminal device, an access network element, a core network element, or an AF.

In some embodiments, the apparatus 1100 is a terminal device, an access network element, a core network element, or an AF.

In some embodiments, the first network element is a network repository function (NRF).

FIG. 12 is a third schematic diagram of a structural composition of a communication apparatus according to the disclosure. The communication apparatus is applied to a first network element. As illustrated in FIG. 12, the communication apparatus 1200 includes an acquisition module 1201.

The acquisition module 1201 is configured to acquire capability information of at least one second node. The capability information of the second node is used for determining whether the second node satisfies a condition for executing a VFL task.

In the disclosure, the capability information of the second node indicates at least one of: whether the second node supports an execution of the VFL task; a time interval during which the second node supports the execution of the VFL task; whether the second node is available as an initiator of the VFL task; a computing power of the second node; or service area information of the second node.

In the disclosure, the apparatus 1200 may further include a first receiving module. The first receiving module is configured to receive parameter information of at least one second node before acquiring the capability information of the at least one second node. For each of the at least one second node, the parameter information of the second node includes at least one of: capability information of the second node; an identifier of the second node; address information of the second node; or an identifier of an application corresponding to the second node.

In the disclosure, for each of the at least one second node, the parameter information of the second node is carried by second registration request information. The second registration request information is registration request information transmitted by a second node to the apparatus 1200.

In the disclosure, the apparatus 1200 may further include a second receiving module. The second receiving module is configured to receive parameter information of a first node. The parameter information of the first node includes at least one of: capability information of the first node; an identifier of the first node; address information of the first node; or an identifier of an application corresponding to the first node. The capability information of the first node indicates at least one of: whether the first node supports an execution of the VFL task; a time interval during which the first node supports the execution of the VFL task; whether the first node is available as an initiator of the VFL task; a computing power of the first node; or a service area of the first node.

In the disclosure, the parameter information of the first node is carried by first registration request information. The first registration request information is registration request information transmitted by the first node to the apparatus 1200.

In the disclosure, the apparatus 1200 may further include a transmitting module. The transmitting module is configured to transmit first information to the first node. The first information indicates the at least one second node satisfying a condition for executing the VFL task.

In the disclosure, the apparatus 1200 may further include a third receiving module. The third receiving module is configured to receive second information from the first node before transmitting the first information to the first node. The second information is used for requesting the first information.

In the disclosure, the first node is a terminal device, an access network element, a core network element, or an AF.

In the disclosure, the second node includes at least one of: a terminal device, an access network element, a core network element, or an AF.

In the disclosure, the apparatus 1200 is a network repository function (NRF).

Those skilled in the art should understand that the related description of the above communication apparatuses according to the disclosure may be understood with reference to the related description of the communication methods according to the embodiments of the disclosure.

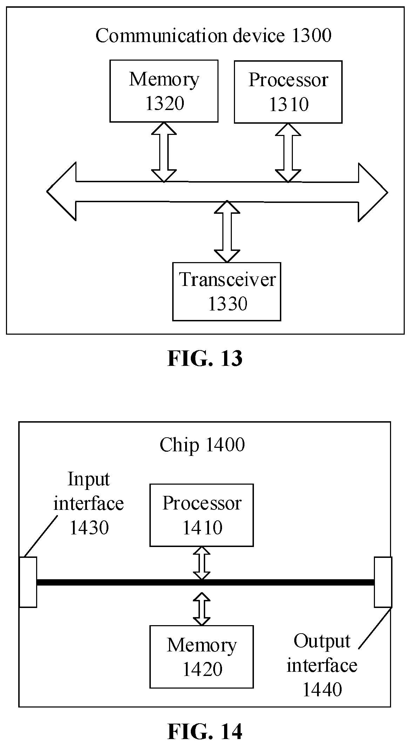

FIG. 13 is a schematic structural diagram of a communication device 1300 according to the disclosure. The communication device may be a terminal device, a network device, or a core network device. The communication device 1300 illustrated in FIG. 13 includes a processor 1310. The processor may invoke a computer program from a memory and execute the computer program to implement the methods in the embodiments of the disclosure.

Optionally, as illustrated in FIG. 13, the communication device 1300 may further include a memory 1320. The processor 1310 may invoke the computer program from the memory 1320 and execute the computer program to implement the methods in the embodiments of the disclosure.

The memory 1320 may be a separate device independent of the processor 1310 or may be integrated into the processor 1310.

Optionally, as illustrated in FIG. 13, the communication device 1300 may further include a transceiver 1330. The processor 1310 may control the transceiver 1330 to communicate with other devices, specifically, may transmit information or data to other devices, or receive information or data transmitted by other devices.

The transceiver 1330 may include a transmitter and a receiver. The transceiver 1330 may further include one or more antennas.

Optionally, the communication device 1300 may specifically be the first node in the embodiments of the disclosure, and the communication device 1300 may implement corresponding processes implemented by the first node in respective methods in the embodiments of the disclosure, which will not be repeated herein for the sake of brevity.

Optionally, the communication device 1300 may specifically be the second node in the embodiments of the disclosure, and the communication device 1300 may implement corresponding processes implemented by the second node in respective methods in the embodiments of the disclosure, which will not be repeated herein for the sake of brevity.

Optionally, the communication device 1300 may specifically be the first network element in the embodiments of the disclosure, and the communication device 1300 may implement corresponding processes implemented by the first network element in respective methods in the embodiments of the disclosure, which will not be repeated herein for the sake of brevity.

FIG. 14 is a schematic structural diagram of a chip according to the disclosure. The chip 1400 illustrated in FIG. 14 includes a processor 1410. The processor 1410 may invoke a computer program from a memory and execute the computer program to implement the methods in the embodiments of the disclosure.

Optionally, as illustrated in FIG. 14, the chip 1400 may further include a memory 1420. The processor 1410 may invoke the computer program from the memory 1420 and execute the computer program to implement the methods in the embodiments of the disclosure.

The memory 1420 may be a separate device independent of the processor 1410 or may be integrated into the processor 1410.

Optionally, the chip 1400 may further include an input interface 1430. The processor 1410 may control the input interface 1430 to communicate with other devices or chips, specifically, may acquire information or data transmitted by other devices or chips.

Optionally, the chip 1400 may further include an output interface 1440. The processor 1410 may control the output interface 1440 to communicate with other devices or chips, specifically, may output information or data to other devices or chips.

Optionally, the chip may be applied to the first node in the embodiments of the disclosure, and the chip may implement the corresponding processes implemented by the first node in respective methods in the embodiments of the disclosure, which will not be repeated herein for the sake of brevity.

Optionally, the chip may be applied to the second node in the embodiments of the disclosure, and the chip may implement the corresponding processes implemented by the second node in respective methods in the embodiments of the disclosure, which will not be repeated herein for the sake of brevity.

Optionally, the chip may be applied to the first network element in the embodiments of the disclosure, and the chip may implement the corresponding processes implemented by the first network element in respective methods in the embodiments of the disclosure, which will not be repeated herein for the sake of brevity.

It should be understood that the chip mentioned in the disclosure may also be referred to as a system level chip, a system chip, a chip system or a system-on-chip.

The disclosure further provides a computer storage medium. One or more programs are stored in the computer storage medium, and the one or more programs may be executed by one or more processors to implement the methods in the embodiments of the disclosure.

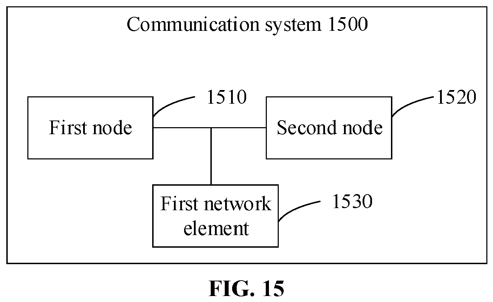

FIG. 15 is a schematic block diagram of a communication system 1500 according to the disclosure. As illustrated in FIG. 15, the communication system 1500 includes a first node 1510, a second node 1520, and a first network element 1530.

The first node 1510 may be configured to implement the corresponding functions implemented by the first node in the above methods, the second node 1520 may be configured to implement the corresponding functions implemented by the second node in the above methods, and the first network element 1530 may be configured to implement the corresponding functions implemented by the first network element in the above methods, which will not be repeated herein for the sake of brevity.

It should be understood that the processor in the disclosure may be an integrated circuit chip having a signal processing capability. In an implementation process, each operation in the above method embodiments may be completed by an integrated logical circuit in a hardware form in the processor or instructions in a software form. The above processor may be a general purpose processor, a digital signal processor (DSP), an application specific integrated circuit (ASIC), a field programmable gate array (FPGA), or other programmable logic devices, a discrete gate or transistor logical device, or a discrete hardware component, for implementing or executing each method, step and logical block diagram disclosed in the embodiments of the disclosure. The general purpose processor may be a microprocessor or the processor may also be any conventional processor and the like. The steps in the methods disclosed in combination with the embodiments of the disclosure may be directly embodied to be executed and completed by a hardware decoding processor or executed and completed by a combination of hardware in the decoding processor and software modules. The software module may be located in a mature storage medium in this field such as a random access memory (RAM), a flash memory, a read-only memory (ROM), a programmable ROM (PROM), an electrically erasable PROM (EEPROM) or a register. The storage medium is located in a memory, and the processor reads information in the memory, and completes the steps in the above methods in combination with the hardware of the processor.

It should be understood that the memory in the disclosure may be a volatile memory or a non-volatile memory, or may include both the volatile and the non-volatile memories. The non-volatile memory may be a ROM, a PROM, an erasable PROM (EPROM), an EEPROM or a flash memory. The volatile memory may be a RAM, and is used as an external cache. By way of illustrative but not limiting description, RAMs in various forms may be adopted, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct Rambus RAM (DR RAM). It should be noted that the memory for the system and method described in the disclosure is intended to include, but not limited to, these and any other suitable types of memories.

It should be understood that the above description of the memory is exemplary and non-limiting. For example, the memory in the disclosure may also be an SRAM, a DRAM, an SDRAM, a DDR SDRAM, an ESDRAM, an SLDRAM, a DR RAM and the like. That is, the memory in the disclosure is intended to include, but not limited to, these and any other suitable types of memories.

The disclosure further provides a computer readable storage medium for storing a computer program.

Optionally, the computer readable storage medium may be applied to the first node in the embodiments of the disclosure, and the computer program causes a computer to execute the corresponding processes implemented by the first node in respective methods in the embodiments of the disclosure, which will not be repeated herein for the sake of brevity.

Optionally, the computer readable storage medium may be applied to the second node in the embodiments of the disclosure, and the computer program causes the computer to execute the corresponding processes implemented by the second node in respective methods in the embodiments of the disclosure, which will not be repeated herein for the sake of brevity.

Optionally, the computer readable storage medium may be applied to the first network element in the embodiments of the disclosure, and the computer program causes the computer to execute the corresponding processes implemented by the first network element in respective methods in the embodiments of the disclosure, which will not be repeated herein for the sake of brevity.

The disclosure further provides a computer program product including computer program instructions.

Optionally, the computer program product may be applied to the first node in the embodiments of the disclosure, and the computer program instructions cause a computer to execute the corresponding processes implemented by the first node in respective methods in the embodiments of the disclosure, which will not be repeated herein for the sake of brevity.

Optionally, the computer program product may be applied to the second node in the embodiments of the disclosure, and the computer program instructions cause the computer to execute the corresponding processes implemented by the second node in respective methods in the embodiments of the disclosure, which will not be repeated herein for the sake of brevity.

Optionally, the computer program product may be applied to the first network element in the embodiments of the disclosure, and the computer program instructions cause the computer to execute the corresponding processes implemented by the first network element in respective methods in the embodiments of the disclosure, which will not be repeated herein for the sake of brevity.

The disclosure further provides a computer program.

Optionally, the computer program may be applied to the first node in the embodiments of the disclosure, and when the computer program is executed on a computer, the computer program causes the computer to execute the corresponding processes implemented by the first node in respective methods in the embodiments of the disclosure, which will not be repeated herein for the sake of brevity.

Optionally, the computer program may be applied to the second node in the embodiments of the disclosure, and when the computer program is executed on the computer, the computer program causes the computer to execute the corresponding processes implemented by the second node in respective methods in the embodiments of the disclosure, which will not be repeated herein for the sake of brevity.

Optionally, the computer program may be applied to the first network element in the embodiments of the disclosure, and when the computer program is executed on the computer, the computer program causes the computer to execute the corresponding processes implemented by the first network element in respective methods in the embodiments of the disclosure, which will not be repeated herein for the sake of brevity.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may implement the described functions by use of different methods for each specific application, but such implementation shall fall within the scope of the disclosure.

Those skilled in the art may clearly learn about that specific working processes of the system, apparatus and unit described above may refer to the corresponding processes in the method embodiments and will not be elaborated herein for convenient and brief description.

In some embodiments provided by the disclosure, it is to be understood that the disclosed system, apparatus and method may be implemented in another manner. For example, the apparatus embodiment described above is only schematic, and for example, division of the units is only a logic function division, and other division manners may be adopted during a practical implementation. For example, multiple units or components may be combined or integrated into another system, or some characteristics may be neglected or not executed. In addition, a coupling or direct coupling or communication connection between displayed or discussed components may be an indirect coupling or communication connection through some interfaces, devices or units, and may be electrical, mechanical or in other forms.

The units described as separate parts may or may not be physically separated, and parts displayed as units may or may not be physical units, and namely may be located in the same place, or may also be distributed onto multiple network units. Part or all of the units may be selected to achieve the purpose of the solutions in the embodiments according to a practical requirement.

In addition, functional units in each embodiment of the disclosure may be integrated into a processing unit, each unit may also exist physically and independently, or two or more than two units may also be integrated into a unit.

When being realized in form of a software functional unit and sold or used as an independent product, the function may also be stored in a computer-readable storage medium. Based on such an understanding, the technical solutions of the disclosure substantially or parts making contributions to the conventional art or part of the technical solutions may be embodied in form of a software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

Described above are merely specific embodiments of the disclosure and the scope of protection of the disclosure is not limited thereto. Therefore, the scope of protection of the disclosure shall be subject to the scope of protection of the claims.

## Claims

1. A communication method, applied to a first node and comprising:
receiving (S501) first information from a first network element, wherein the first information indicates at least one second node satisfying a condition for executing a vertical federated learning, VFL, task; and
determining (S502), from the at least one second node, at least one participating node participating in the VFL task,
**characterized in that** the method further comprises:
transmitting data requirement information to the at least one second node, wherein the data requirement information is used for determining data for executing the VFL task, and the data requirement information comprises: a type of the data required for executing the VFL task, and/or a valid time of the required data; and
receiving third information from the at least one second node, wherein the third information indicates whether the second node agrees to participate in the VFL task.

2. The method of claim 1, wherein for each of the at least one second node, parameter information of the second node is carried by second registration request information, the second registration request information is registration request information transmitted by the second node to the first network element, and the parameter information of the second node comprises at least one of:
capability information of the second node;
an identifier of the second node;
address information of the second node; or
an identifier of an application corresponding to the second node.

3. The method of claim 1 or 2, further comprising:
before receiving the first information from the first network element,
transmitting parameter information of the first node to the first network element, wherein the parameter information of the first node comprises at least one of:
capability information of the first node;
an identifier of the first node;
address information of the first node; or
an identifier of an application corresponding to the first node,
wherein the capability information of the first node indicates at least one of:
whether the first node supports an execution of the VFL task;
a time interval during which the first node supports the execution of the VFL task;
whether the first node is available as an initiator of the VFL task;
a computing power of the first node; or
a service area of the first node.

4. The method of claim 3, wherein
the first node is an application function, AF, and transmitting the parameter information of the first node to the first network element comprises:
transmitting parameter information of a first event to the first network element via a network exposure function, NEF, wherein the parameter information of the first event is generated based on the parameter information of the first node,
wherein the parameter information of the first event indicates at least one of: whether the AF supports an execution of the first event; a time interval during which the AF supports the execution of the first event; whether the AF is available as an initiator of the first event; a computing power of the AF; or an identifier of an application corresponding to the AF,
wherein the first event is associated with the VFL task,
and/or
the parameter information of the first node is carried by first registration request information, and the first registration request information is registration request information transmitted by the first node to the first network element.

5. The method of any one of claims 1 to 4, further comprising:
before receiving the first information from the first network element,
transmitting second information to the first network element, wherein the second information is used for requesting the first information,
wherein the second information indicates at least one of:
a time interval during which the VFL task is executed; or
a service area where the VFL task is executed.

6. The method of claim 1, wherein the first node is an application function, AF, and transmitting the data requirement information to the at least one second node comprises:
transmitting the data requirement information to the at least one second node via a network exposure function, NEF.

7. The method of any one of claims 1 to 6, further comprising:
transmitting, to the at least one participating node, an association identifier for aggregating different execution results of a same VFL task, and/or
receiving a first execution result corresponding to the VFL task, wherein the first execution result comprises: a second execution result of the at least one participating node executing the VFL task, and/or at least one aggregation result, wherein each of the at least one aggregation result is obtained by aggregating at least two second execution results.

8. The method of claim 7, wherein each of the at least one aggregation result is obtained by aggregating based on a same association identifier.

9. The method of claim 7 or 8, further comprising:
aggregating the execution result corresponding to the VFL task and an execution result of the first node executing the VFL task, that have the same association identifier.

10. The method of claim 9, wherein the association identifier comprises a model association identifier and a result association identifier, the model association identifier is used for identifying and/or aggregating different model training results for a same VFL task, and the result association identifier is used for identifying and/or aggregating different model inference results for the same VFL task.

11. The method of any one of claims 1 to 5, or 7 to 10, wherein
the first node is a core network element, and/or
the second node comprises at least one of: a core network element, or an application function, AF, and/or
the first network element is a network repository function, NRF.

12. A communication method, applied to a second node and comprising:
transmitting (S601) capability information of the second node to a first network element, wherein the capability information of the second node is used for determining whether the second node satisfies a condition for executing a vertical federated learning, VFL, task,
**characterized in that** the method further comprises:
receiving data requirement information from a first node, wherein the data requirement information is used for determining data for executing the VFL task, and the data requirement information comprises: a type of the data required for executing the VFL task, and/or a valid time of the required data; and
transmitting third information to the first node, wherein the third information indicates whether the second node agrees to participate in the VFL task.

13. The method of claim 12, further comprising:
transmitting second registration request information to the first network element, wherein the second registration request information carries parameter information of the second node, and the parameter information of the second node comprises at least one of:
the capability information of the second node;
an identifier of the second node;
address information of the second node; or
an identifier of an application corresponding to the second node.

14. A communication apparatus (1000), comprising:
a first receiving module (1001), configured to receive first information from a first network element, wherein the first information indicates at least one second node satisfying a condition for executing a vertical federated learning, VFL, task; and
a determining module (1002), configured to determine, from the at least one second node, at least one participating node participating in the VFL task,
**characterized in that** the communication apparatus (1000) further comprises:
a third transmitting module, configured to transmit data requirement information to the at least one second node, wherein the data requirement information is used for determining data for executing the VFL task, and the data requirement information comprises: a type of the data required for executing the VFL task, and/or a valid time of the required data; and
a second receiving module, configured to receive third information from the at least one second node, wherein the third information indicates whether the second node agrees to participate in the VFL task.

15. A communication apparatus (1100), comprising:
a first transmitting module (1101), configured to transmit capability information of the communication apparatus (1100) to a first network element, wherein the capability information of the communication apparatus (1100) is used for determining whether the communication apparatus (1100) satisfies a condition for executing a vertical federated learning, VFL, task,
**characterized in that** the communication apparatus (1100) further comprises:
a first receiving module, configured to receive data requirement information from a first node, wherein the data requirement information is used for determining data for executing the VFL task, and the data requirement information comprises: a type of the data required for executing the VFL task, and/or a valid time of the required data; and
a third transmitting module, configured to transmit third information to the first node, wherein the third information indicates whether the communication apparatus (1100) agrees to participate in the VFL task.

## Patentansprüche

1. Kommunikationsverfahren, das auf einen ersten Knoten angewendet wird und Folgendes umfasst:
Empfangen (S501) erster Informationen von einem ersten Netzelement, wobei die ersten Informationen mindestens einen zweiten Knoten angeben, der eine Bedingung zum Ausführen einer Aufgabe für vertikales föderiertes Lernen, VFL-Aufgabe, erfüllt; und
Bestimmen (S502), aus dem mindestens einen zweiten Knoten, mindestens eines teilnehmenden Knotens, der an der VFL-Aufgabe teilnimmt,
**dadurch gekennzeichnet, dass** das Verfahren ferner Folgendes umfasst:
Senden von Datenanforderungsinformationen an den mindestens einen zweiten Knoten, wobei die Datenanforderungsinformationen zum Bestimmen von Daten zum Ausführen der VFL-Aufgabe verwendet werden und die Datenanforderungsinformationen Folgendes umfassen: einen Typ der zum Ausführen der VFL-Aufgabe erforderlichen Daten und/oder eine gültige Zeit der erforderlichen Daten; und
Empfangen dritter Informationen von dem mindestens einen zweiten Knoten, wobei die dritten Informationen angeben, ob der zweite Knoten der Teilnahme an der VFL-Aufgabe zustimmt.

2. Verfahren nach Anspruch 1, wobei für jeden des mindestens einen zweiten Knotens Parameterinformationen des zweiten Knotens durch zweite Registrierungsanforderungsinformationen übertragen werden, die zweiten Registrierungsanforderungsinformationen Registrierungsanforderungsinformationen sind, die durch den zweiten Knoten an das erste Netzelement gesendet werden, und die Parameterinformationen des zweiten Knotens mindestens eines von Folgendem umfassen:
Fähigkeitsinformationen des zweiten Knotens;
einer Kennung des zweiten Knotens;
Adressinformationen des zweiten Knotens; oder
einer Kennung einer Anwendung, die dem zweiten Knoten entspricht.

3. Verfahren nach Anspruch 1 oder 2, das ferner Folgendes umfasst:
vor dem Empfangen der ersten Informationen von dem ersten Netzelement
Senden von Parameterinformationen des ersten Knotens an das erste Netzelement, wobei die Parameterinformationen des ersten Knotens mindestens eines von Folgendem umfassen:
Fähigkeitsinformationen des ersten Knotens;
einer Kennung des ersten Knotens;
Adressinformationen des ersten Knotens; oder
einer Kennung einer Anwendung, die dem ersten Knoten entspricht,
wobei die Fähigkeitsinformationen des ersten Knotens mindestens eines von Folgendem angeben:
ob der erste Knoten eine Ausführung der VFL-Aufgabe unterstützt;
einem Zeitintervall, während dessen der erste Knoten die Ausführung der VFL-Aufgabe unterstützt;
ob der erste Knoten als ein Initiator der VFL-Aufgabe verfügbar ist;
einer Rechenleistung des ersten Knotens; oder
einem Versorgungsbereich des ersten Knotens.

4. Verfahren nach Anspruch 3, wobei
der erste Knoten eine Anwendungsfunktion, AF, ist und das Senden der Parameterinformationen des ersten Knotens an das erste Netzelement Folgendes umfasst:
Senden von Parameterinformationen eines ersten Ereignisses an das erste Netzelement über eine Netzexpositionsfunktion, NEF, wobei die Parameterinformationen des ersten Ereignisses basierend auf den Parameterinformationen des ersten Knotens erzeugt werden,
wobei die Parameterinformationen des ersten Ereignisses mindestens eines von Folgendem angeben: ob die AF eine Ausführung des ersten Ereignisses unterstützt; einem Zeitintervall, während dessen die AF die Ausführung des ersten Ereignisses unterstützt; ob die AF als ein Initiator des ersten Ereignisses verfügbar ist; einer Rechenleistung der AF; oder einer Kennung einer Anwendung, die der AF entspricht,
wobei das erste Ereignis der VFL-Aufgabe zugeordnet ist, und/oder
die Parameterinformationen des ersten Knotens durch erste Registrierungsanforderungsinformationen übertragen werden und die ersten Registrierungsanforderungsinformationen durch den ersten Knoten an das erste Netzelement gesendete Registrierungsanforderungsinformationen sind.

5. Verfahren nach einem der Ansprüche 1 bis 4, das ferner Folgendes umfasst:
vor dem Empfangen der ersten Informationen von dem ersten Netzelement
Senden zweiter Informationen an das erste Netzelement, wobei die zweiten Informationen zum Anfordern der ersten Informationen verwendet werden,
wobei die zweiten Informationen mindestens eines von Folgendem angeben:
einem Zeitintervall, während dessen die VFL-Aufgabe ausgeführt wird; oder
einem Versorgungsbereich, in dem die VFL-Aufgabe ausgeführt wird.

6. Verfahren nach Anspruch 1, wobei der erste Knoten eine Anwendungsfunktion, AF, ist und das Senden der Datenanforderungsinformationen an den mindestens einen zweiten Knoten Folgendes umfasst:
Senden der Datenanforderungsinformationen an den mindestens einen zweiten Knoten über eine Netzexpositionsfunktion, NEF.

7. Verfahren nach einem der Ansprüche 1 bis 6, das ferner Folgendes umfasst:
Senden, an den mindestens einen teilnehmenden Knoten, einer Zuordnungskennung zum Aggregieren verschiedener Ausführungsergebnisse einer selben VFL-Aufgabe und/oder Empfangen eines ersten Ausführungsergebnisses, das der VFL-Aufgabe entspricht, wobei das erste Ausführungsergebnis Folgendes umfasst: ein zweites Ausführungsergebnis des mindestens einen teilnehmenden Knotens, der die VFL-Aufgabe ausführt, und/oder mindestens ein Aggregationsergebnis, wobei jedes des mindestens einen Aggregationsergebnisses durch Aggregieren von mindestens zwei zweiten Ausführungsergebnissen erhalten wird.

8. Verfahren nach Anspruch 7, wobei jedes des mindestens einen Aggregationsergebnisses durch Aggregieren basierend auf einer selben Zuordnungskennung erhalten wird.

9. Verfahren nach Anspruch 7 oder 8, das ferner Folgendes umfasst:
Aggregieren des Ausführungsergebnisses, das der VFL-Aufgabe entspricht, und eines Ausführungsergebnisses des ersten Knotens, der die VFL-Aufgabe ausführt, die dieselbe Zuordnungskennung aufweisen.

10. Verfahren nach Anspruch 9, wobei die Zuordnungskennung eine Modellzuordnungskennung und eine Ergebniszuordnungskennung umfasst, die Modellzuordnungskennung zum Identifizieren und/oder Aggregieren verschiedener Modelltrainingsergebnisse für eine selbe VFL-Aufgabe verwendet wird und die Ergebniszuordnungskennung zum Identifizieren und/oder Aggregieren verschiedener Modellinferenzergebnisse für dieselbe VFL-Aufgabe verwendet wird.

11. Verfahren nach einem der Ansprüche 1 bis 5 oder 7 bis 10, wobei
der erste Knoten ein Kernnetzelement ist und/oder
der zweite Knoten mindestens eines von Folgendem umfasst:
einem Kernnetzelement oder einer Anwendungsfunktion, AF, und/oder
das erste Netzelement eine Netz-Repository-Funktion, NRF, ist.

12. Kommunikationsverfahren, das auf einen zweiten Knoten angewendet wird und Folgendes umfasst:
Senden (S601) von Fähigkeitsinformationen des zweiten Knotens an ein erstes Netzelement, wobei die Fähigkeitsinformationen des zweiten Knotens verwendet werden, um zu bestimmen, ob der zweite Knoten eine Bedingung zum Ausführen einer Aufgabe für vertikales föderiertes Lernen, VFL-Aufgabe, erfüllt,
**dadurch gekennzeichnet, dass** das Verfahren ferner Folgendes umfasst:
Empfangen von Datenanforderungsinformationen von einem ersten Knoten, wobei die Datenanforderungsinformationen zum Bestimmen von Daten zum Ausführen der VFL-Aufgabe verwendet werden und die Datenanforderungsinformationen Folgendes umfassen: einen Typ der zum Ausführen der VFL-Aufgabe erforderlichen Daten und/oder eine gültige Zeit der erforderlichen Daten; und
Senden dritter Informationen an den ersten Knoten, wobei die dritten Informationen angeben, ob der zweite Knoten der Teilnahme an der VFL-Aufgabe zustimmt.

13. Verfahren nach Anspruch 12, das ferner Folgendes umfasst:
Senden zweiter Registrierungsanforderungsinformationen an das erste Netzelement, wobei die zweiten Registrierungsanforderungsinformationen
Parameterinformationen des zweiten Knotens übertragen und die Parameterinformationen des zweiten Knotens mindestens eines von Folgendem umfassen:
den Fähigkeitsinformationen des zweiten Knotens;
einer Kennung des zweiten Knotens;
Adressinformationen des zweiten Knotens; oder
einer Kennung einer Anwendung, die dem zweiten Knoten entspricht.

14. Kommunikationsvorrichtung (1000), die Folgendes umfasst:
ein erstes Empfangsmodul (1001), das dazu konfiguriert ist, erste Informationen von einem ersten Netzelement zu empfangen, wobei die ersten Informationen mindestens einen zweiten Knoten angeben, der eine Bedingung zum Ausführen einer Aufgabe für vertikales föderiertes Lernen, VFL-Aufgabe, erfüllt; und
ein Bestimmungsmodul (1002), das dazu konfiguriert ist, mindestens einen teilnehmenden Knoten, der an der VFL-Aufgabe teilnimmt, aus dem mindestens einen zweiten Knoten zu bestimmen,
**dadurch gekennzeichnet, dass** die Kommunikationsvorrichtung (1000) ferner Folgendes umfasst:
ein drittes Sendemodul, das dazu konfiguriert ist, Datenanforderungsinformationen an den mindestens einen zweiten Knoten zu senden, wobei die Datenanforderungsinformationen zum Bestimmen von Daten zum Ausführen der VFL-Aufgabe verwendet werden und die Datenanforderungsinformationen Folgendes umfassen: einen Typ der zum Ausführen der VFL-Aufgabe erforderlichen Daten und/oder eine gültige Zeit der erforderlichen Daten; und
ein zweites Empfangsmodul, das dazu konfiguriert ist, dritte Informationen von dem mindestens einen zweiten Knoten zu empfangen, wobei die dritten Informationen angeben, ob der zweite Knoten der Teilnahme an der VFL-Aufgabe zustimmt.

15. Kommunikationsvorrichtung (1100), die Folgendes umfasst:
ein erstes Sendemodul (1101), das dazu konfiguriert ist, Fähigkeitsinformationen der Kommunikationsvorrichtung (1100) an ein erstes Netzelement zu senden, wobei die Fähigkeitsinformationen der Kommunikationsvorrichtung (1100) verwendet werden, um zu bestimmen, ob die Kommunikationsvorrichtung (1100) eine Bedingung zum Ausführen einer Aufgabe für vertikales föderiertes Lernen, VFL-Aufgabe, erfüllt,
**dadurch gekennzeichnet, dass** die Kommunikationsvorrichtung (1100) ferner Folgendes umfasst:
ein erstes Empfangsmodul, das dazu konfiguriert ist, Datenanforderungsinformationen von einem ersten Knoten zu empfangen, wobei die Datenanforderungsinformationen zum Bestimmen von Daten zum Ausführen der VFL-Aufgabe verwendet werden und die Datenanforderungsinformationen Folgendes umfassen: einen Typ der zum Ausführen der VFL-Aufgabe erforderlichen Daten und/oder eine gültige Zeit der erforderlichen Daten; und
ein drittes Sendemodul, das dazu konfiguriert ist, dritte Informationen an den ersten Knoten zu senden, wobei die dritten Informationen angeben, ob die Kommunikationsvorrichtung (1100) der Teilnahme an der VFL-Aufgabe zustimmt.

## Revendications

1. Procédé de communication, appliqué à un premier nœud et comprenant les étapes suivantes :
recevoir (S501) des premières informations d'un premier élément de réseau, les premières informations indiquant au moins un deuxième nœud satisfaisant une condition d'exécution d'une tâche d'apprentissage fédéré vertical, VFL ; et
déterminer (S502), à partir de l'au moins un deuxième nœud, au moins un nœud participant qui participe à la tâche VFL,
**caractérisé en ce que** le procédé comprend en outre les étapes suivantes :
transmettre des informations de demande de données à l'au moins un deuxième nœud, les informations de demande de données étant utilisées pour déterminer des données pour exécuter la tâche VFL, et les informations de demande de données comprenant : le type de données requises pour exécuter la tâche VFL, et/ou l'heure valide des données requises ; et
recevoir des troisièmes informations en provenance d'au moins un deuxième nœud, les troisièmes informations indiquant si le deuxième nœud accepte de participer à la tâche VFL.

2. Procédé selon la revendication 1, dans lequel, pour chacun de l'au moins un deuxième nœud, des informations de paramètre du deuxième nœud sont portées par des deuxièmes informations de demande d'enregistrement, les deuxièmes informations de demande d'enregistrement sont des informations de demande d'enregistrement transmises par le deuxième nœud au premier élément de réseau, et les informations de paramètre du deuxième nœud comprennent au moins l'une des informations suivantes :
des informations de capacité du deuxième nœud ;
un identifiant du deuxième nœud ;
des informations d'adresse du deuxième nœud ; ou
un identifiant d'une application correspondant au deuxième nœud.

3. Procédé selon la revendication 1 ou la revendication 2, comprenant en outre les étapes suivantes :
avant de recevoir les premières informations du premier élément de réseau,
transmettre des informations de paramètre du premier nœud au premier élément de réseau, les informations de paramètre du premier nœud comprenant au moins l'une des informations suivantes :
des informations de capacité du premier nœud ;
un identifiant du premier nœud ;
des informations d'adresse du premier nœud ; ou
un identifiant d'une application correspondant au premier nœud,
où les informations de capacité du premier nœud indiquent au moins l'un parmi l'un des points suivants :
si le premier nœud supporte ou non une exécution de la tâche VFL ;
un intervalle de temps pendant lequel le premier nœud supporte l'exécution de la tâche VFL ;
si le premier nœud est ou non disponible en tant qu'initiateur de la tâche VFL ;
une puissance de calcul du premier nœud ; ou
une zone de service du premier nœud.

4. Procédé selon la revendication 3, dans lequel
le premier nœud est une fonction d'application, AF, et la transmission des informations de paramètre du premier nœud au premier élément de réseau comprend l'étape suivante :
transmettre des informations de paramètre d'un premier événement au premier élément de réseau par l'intermédiaire d'une fonction d'exposition de réseau, NEF, où les informations de paramètres du premier événement sont générées sur la base des informations de paramètre du premier nœud,
où les informations de paramètre du premier événement indiquent au moins l'un des points suivants : si l'AF supporte ou non une exécution du premier événement ; un intervalle de temps pendant lequel l'AF supporte l'exécution du premier événement ; si l'AF est ou non disponible en tant qu'initiateur du premier événement ;
une puissance de calcul de l'AF ; ou un identifiant d'une application correspondant à l'AF,
où le premier événement est associé à la tâche VFL,
et/ou
les informations de paramètre du premier nœud sont transportées par les premières informations de demande d'enregistrement, et les premières informations de demande d'enregistrement sont des informations de demande d'enregistrement transmises par le premier nœud au premier élément de réseau.

5. Procédé selon l'une quelconque des revendications 1 à 4, comprenant en outre les étapes suivantes :
avant de recevoir les premières informations du premier élément de réseau,
transmettre des deuxièmes informations au premier élément de réseau, les deuxièmes informations étant utilisées pour demander les premières informations,
les deuxièmes informations comprenant au moins une information parmi les suivantes :
un intervalle de temps pendant lequel la tâche VFL est exécutée ; ou
une zone de service dans laquelle la tâche VFL est exécutée.

6. Procédé selon la revendication 1, dans lequel le premier nœud est une fonction d'application, AF, et la transmission des informations de demande de données à l'au moins un deuxième nœud comprend l'étape suivante : transmettre les informations de demande de données à l'au moins un deuxième nœud par l'intermédiaire d'une fonction d'exposition de réseau, NEF.

7. Procédé selon l'une quelconque des revendications 1 à 6, comprenant en outre les étapes suivantes :
transmettre, à l'au moins un nœud participant, un identifiant d'association permettant d'agréger différents résultats d'exécution d'une même tâche VFL, et/ou
recevoir un premier résultat d'exécution correspondant à la tâche VFL, le premier résultat d'exécution comprenant : un deuxième résultat d'exécution de l'au moins un nœud participant exécutant la tâche VFL, et/ou au moins un résultat d'agrégation, chacun de l'au moins un résultat d'agrégation étant obtenu par agrégation d'au moins deux deuxièmes résultats d'exécution.

8. Procédé selon la revendication 7, dans lequel chacun de l'au moins un résultat d'agrégation est obtenu par agrégation sur la base d'un même identifiant d'association.

9. Procédé selon la revendication 7 ou la revendication 8, comprenant en outre l'étape suivante :
agréger le résultat d'exécution correspondant à la tâche VFL et un résultat d'exécution du premier nœud exécutant la tâche VFL, et qui ont le même identifiant d'association.

10. Procédé selon la revendication 9, dans lequel l'identifiant d'association comprend un identifiant d'association de modèle et un identifiant d'association de résultat, l'identifiant d'association de modèle est utilisé pour identifier et/ou agréger différents résultats d'apprentissage de modèle pour une même tâche VFL, et l'identifiant d'association de résultat est utilisé pour identifier et/ou agréger différents résultats d'inférence de modèle pour la même tâche VFL.

11. Procédé selon l'une quelconque des revendications 1 à 5 ou 7 à 10, dans lequel
le premier nœud est un élément de réseau central, et/ou le deuxième nœud comprend au moins un élément parmi : un élément de réseau central, ou une fonction d'application, AF, et/ou
le premier élément de réseau est une fonction de répertoire de réseau, NRF.

12. Procédé de communication, appliqué à un deuxième nœud et comprenant les étapes suivantes :
transmettre (S601) des informations de capacité du deuxième nœud à un premier élément de réseau, les informations de capacité du deuxième nœud étant utilisées pour déterminer si le deuxième nœud satisfait ou non à une condition d'exécution d'une tâche d'apprentissage fédéré vertical, VFL,
**caractérisé en ce que** le procédé comprend en outre les étapes suivantes :
recevoir des informations de demande de données en provenance d'un premier nœud, les informations de demande de données étant utilisées pour déterminer des données pour exécuter la tâche VFL, et les informations de demande de données comprenant : le type de données requises pour exécuter la tâche VFL, et/ou l'heure valide des données requises ; et
transmettre des troisièmes informations vers le premier nœud, les troisièmes informations indiquant si le deuxième nœud accepte de participer à la tâche VFL.

13. Procédé selon la revendication 12, comprenant en outre l'étape suivante :
transmettre des deuxièmes informations de demande d'enregistrement au premier élément de réseau, les deuxièmes informations de demande d'enregistrement portant des informations de paramètre du deuxième nœud, et les informations de paramètre du deuxième nœud comprenant au moins l'une des informations suivantes :
les informations de capacité du deuxième nœud ;
un identifiant du deuxième nœud ;
des informations d'adresse du deuxième nœud ; ou
un identifiant d'une application correspondant au deuxième nœud.

14. Appareil de communication (1000), comprenant :
un premier module de réception (1001), configuré pour recevoir des premières informations d'un premier élément de réseau, les premières informations indiquant au moins un deuxième nœud satisfaisant une condition d'exécution d'une tâche d'apprentissage fédéré vertical, VFL ; et
un module de détermination (1002), configuré pour déterminer, à partir de l'au moins un deuxième nœud, au moins un nœud participant qui participe à la tâche VFL,
**caractérisé en ce que** l'appareil de communication (1000) comprend en outre :
un troisième module de transmission, configuré pour transmettre des informations de demande de données à l'au moins un deuxième nœud, les informations de demande de données étant utilisées pour déterminer des données pour exécuter la tâche VFL, et les informations de demande de données comprenant : le type de données requises pour exécuter la tâche VFL, et/ou l'heure valide des données requises ; et
un deuxième module de réception, configuré pour recevoir des troisièmes informations en provenance d'au moins un deuxième nœud, les troisièmes informations indiquant si le deuxième nœud accepte de participer à la tâche VFL.

15. Appareil de communication (1100), comprenant :
un premier module de transmission (1101), configuré pour transmettre des informations de capacité de l'appareil de communication (1100) à un premier élément de réseau, où les informations de capacité de l'appareil de communication (1100) sont utilisées pour déterminer si l'appareil de communication (1100) satisfait à une condition d'exécution d'une tâche d'apprentissage fédéré vertical, VFL,
**caractérisé en ce que** l'appareil de communication (1100) comprend en outre :
un premier module de réception, configuré pour recevoir des informations de demande de données en provenance d'un premier nœud, les informations de demande de données étant utilisées pour déterminer des données pour exécuter la tâche VFL, et les informations de demande de données comprenant : le type de données requises pour exécuter la tâche VFL, et/ou l'heure valide des données requises ; et
un troisième module de transmission, configuré pour transmettre des troisièmes informations au premier nœud, les troisièmes informations indiquant si l'appareil de communication (1100) accepte de participer à la tâche VFL.
